(19) **Europäisches Patentamt**
**European Patent Office**
**Office européen des brevets**

(11) **EP 1 777 806 A2**

(12) **EUROPEAN PATENT APPLICATION**

(43) Date of publication:
**25.04.2007 Bulletin 2007/17**

(51) Int Cl.:
*H02P 21/06* (2006.01)   *B62D 5/04* (2006.01)

(21) Application number: **06022063.9**

(22) Date of filing: **20.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.10.2005 JP 2005307050**
**31.05.2006 JP 2006152536**

(71) Applicant: **NSK Ltd.**
**Shinagawa-ku,**
**Tokyo (JP)**

(72) Inventors:
• **Jiang, Chun Hao**
**Maebashi-shi**
**Gunma 371-8527 (JP)**

• **Mori, Kenji**
**Maebashi-shi**
**Gunma 371-8527 (JP)**
• **Sakaguchi, Toru**
**Maebashi-shi**
**Gunma 371-8527 (JP)**
• **Kovudhikulrungsri, Lilit**
**Maebashi-shi**
**Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Motor drive control apparatus and electric power steering apparatus**

(57)   A motor drive control apparatus for controlling a motor has a main control part that performs a flux weakening control by a vector control of d-q axes and a rate-limit control part that controls a rate of change in a d axis current command value in the vector control. Further, there is provided a motor control apparatus for controlling a motor has a motor angular speed detection part that detects a motor angular speed of the motor and a motor control part having a current control system that controls the electric motor based on a motor current and a current command value. The motor control part calculate the current command value in which torque becomes constant by considering characteristics of the current control system based on a motor angular speed detected by the motor angular speed detection part.

## FIG. 1

**Description**

BACKGROUND OF THE INVENTION

1. Field of the Invention

The present invention relates to a drive control apparatus of a motor for performing flux weakening control by vector control of d-q axes, and particularly to a motor drive control apparatus for suppressing occurrence of abnormal sound or vibration while preventing a sudden change in a motor output by controlling a rate of change (an amount of change per constant control period or unit time) in a d axis current command value in order to avoid a sudden change in a d axis current. Also, the invention relates to an electric power steering apparatus in which its motor drive control apparatus is mounted for use in motor control of electric power steering.
Further, the present invention relates to an electric motor control apparatus comprising motor control part having a current control system that controls an electric motor based on a motor current and a current command value, and an electric power steering apparatus using this electric motor control apparatus.

2. Description of the Background Art

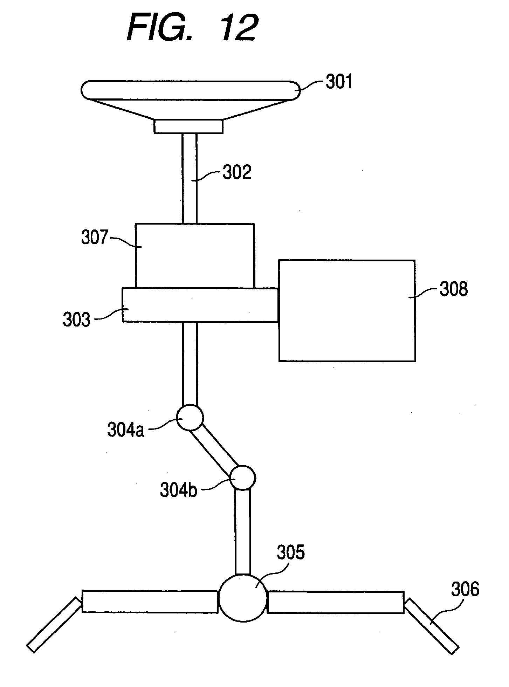

An electric power steering apparatus for applying (assisting) assist force by rotational force of a motor so that a steering wheel of an automobile can be lightly operated has been used widely. This electric power steering apparatus is constructed so as to apply driving force of the motor to a rack shaft or a steering shaft as assist force by a transmission mechanism such as a belt or a gear through a reducer.
A general configuration of such an electric power steering apparatus is shown in Fig. 12. A column shaft 302 of a steering wheel 301 is joined to tie rods 306 of front wheels through a reduction gear 303, universal joints 304a and 304b, and a pinion rack mechanism 305. The column shaft 302 is provided with a torque sensor 307 for detecting steering torque of the steering wheel 301, and a motor 308 for assisting steering force of the steering wheel 301 is joined to the column shaft 302 through the reduction gear 303.
In the electric power steering apparatus of such a configuration, steering torque by a steering wheel operation of a driver transmitted from the steering wheel 301 is detected by the torque sensor 307 and the motor 308 is driven and controlled by a current command value calculated based on the torque signal and vehicle speed and this driving results in assist force of the steering wheel operation of the driver and the driver can perform the steering wheel operation with light force. That is, any current command value is calculated from the steering torque outputted by the steering wheel operation and by how the motor 308 is controlled based on the current command value, good or bad steering feeling is determined and performance of the electric power steering apparatus depends largely.
General motor characteristics and torque control of the motor for achieving desirable motor control in the electric power steering apparatus from such a standpoint will be described.
Referring first to the motor characteristics, a normal working region of a motor can be defined by a torque-speed characteristic (T-n characteristic) derived from a motor output equation. To obtain this, a motor voltage equation about a three-phase Brush-Less DC motor (BLDC motor) as shown in a mathematical formula 1-1 is considered.
$$(\text{Mathematical formula 1-1})$$

$$v = EMF + R \bullet i + L \bullet di/dt$$

where v is a phase voltage of a motor,
i is a phase current of a motor,
EMF is a back electromotive force,
R is a resistance value per phase of a motor and
L is an inductance value per phase.
Here, when it is in a saturation state, that is, duty of PWM (Pulse Width Modulation) is 100 %, a battery voltage Vbat for motor driving is applied to two windings of the motor, so that the mathematical formula 1-1 can be again represented as shown by a mathematical formula 1-2.
**(Mathematical formula 1-2)**

$$Vbat = EMF_{LL} + 2R \bullet I$$

where $EMF_{LL}$ is a back electromotive force measured between two phases and I is a motor current.

Next, a mathematical formula 1-5 can be derived when the mathematical formula 1-2 is computed using a mathematical formula 1-3 which is an equation of a back electromotive force EMF and a mathematical formula 1-4 which is a torque equation.

**(Mathematical formula 1-3)**

$$EMF_{LL} = Ke \bullet \omega$$

where Ke is a back electromotive force constant and $\omega$ is an angular speed (rotational speed).

**(Mathematical formula 1-4)**

$$T = Kt \bullet I$$

where Kt is a torque constant.

**(Mathematical formula 1-5)**

$$\omega = \omega_0(1-(I/I_0)) = \omega_0(1-(T/T_0)) \quad [rad/s]$$

where $\omega_0$=Vbat/Ke is an angular speed at no load (torque is 0),
$I_0$=Vbat/2R is a detent current (angular speed is 0) and
$T_0$=Kt is detent torque.

When the mathematical formula 1-5 is rewritten using rpm as a unit, it is represented as shown by a mathematical formula 1-6.

**(Mathematical formula 1-6)**

$$n = n_0(1-(I/I_0)) = n(1-(T/T_0)) \quad [rpm]$$

The mathematical formula 1-6 represents a linear torque-speed characteristic (T-n characteristic).

Here, a torque-speed characteristic (T-n characteristic) of an actual brushless DC motor is slightly different from the mathematical formula 1-6 and can be represented as shown by the following mathematical formula 1-7.

(Mathematical formula 1-7)

$$n = n_0 - (n_0 - n_{rated}) \bullet T/T_{rated}$$

where $n_0$ is the rotation speed at no load and $n_{rated}$ is a rated speed and $T_{rated}$ is rated torque.

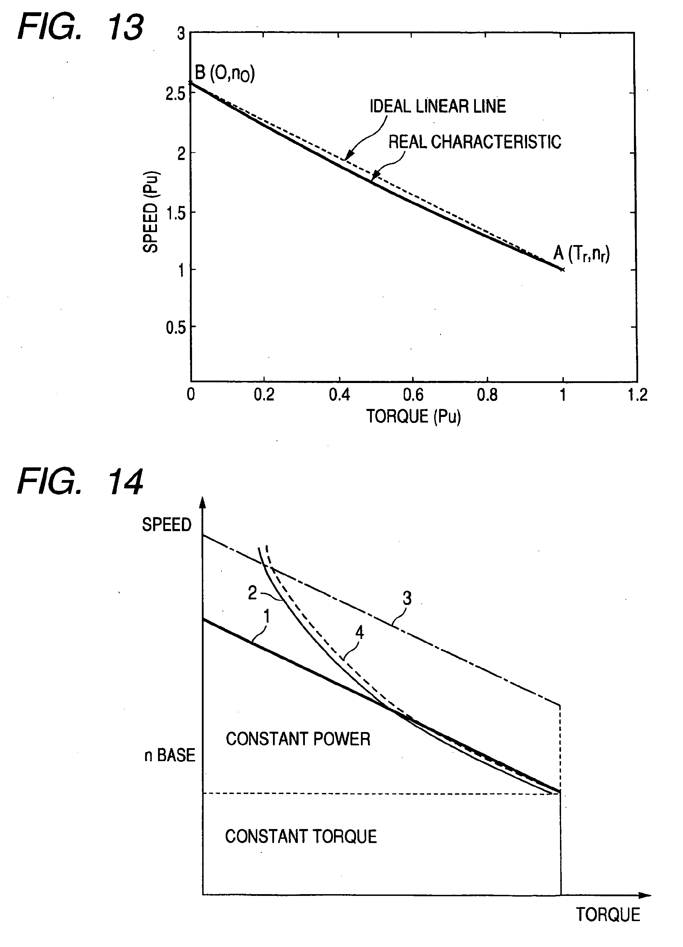

When the mathematical formula 1-6 and the mathematical formula 1-7 are illustrated, they are represented as shown in Fig. 13. In addition, in Fig. 13, point A is a point indicating a rating and point B is a point indicating no load. While a broken line shown by the mathematical formula 1-6 is an ideal linear line, a real characteristic (solid line) shown by the mathematical formula 1-7 is slightly different from the ideal linear line. This is due to an influence of an inductance value L of a motor. The real characteristic becomes a line distant from the ideal linear line as a larger current passes.

Here, a meaning indicated by a T-n characteristic of Fig. 13 indicates the limit of a motor. In a lower region of the T-n characteristic of Fig. 13, the motor operates from a stop state to the maximum angular speed without exceeding the thermal and electrical limits and can output the maximum torque.

In Fig. 14, a characteristic 1 represents a T-n characteristic of a motor with a small output and a characteristic 3 represents a characteristic of a motor with a large output. Also, in the case of being assumed that a characteristic 2 represents a motor load characteristic necessary for an electric power steering apparatus, when the motor with a large output represented by the characteristic 3 can be used, the load characteristic of the characteristic 2 can be covered in substantially all the regions, but there are problems that an outer shape or cost of a motor increases. Therefore, when the load characteristic of the characteristic 2 attempts to be covered by the motor with a small output of the characteristic 1, the load characteristic cannot be covered in a high-speed rotation region. Because of that, a method for changing the T-n characteristic of the motor of the characteristic 1 into a T-n characteristic of a characteristic 4 using flux weakening control in vector control of a motor is contemplated as a method for covering the load characteristic of the characteristic 2 by the motor of the characteristic 1.

Control of a motor of an electric power steering apparatus by vector control in consideration of flux weakening control is conventionally well known. Also in, for example, Japanese Patent Unexamined Publication JP-A-2001-18822, a motor of an electric power steering apparatus is controlled using vector control.

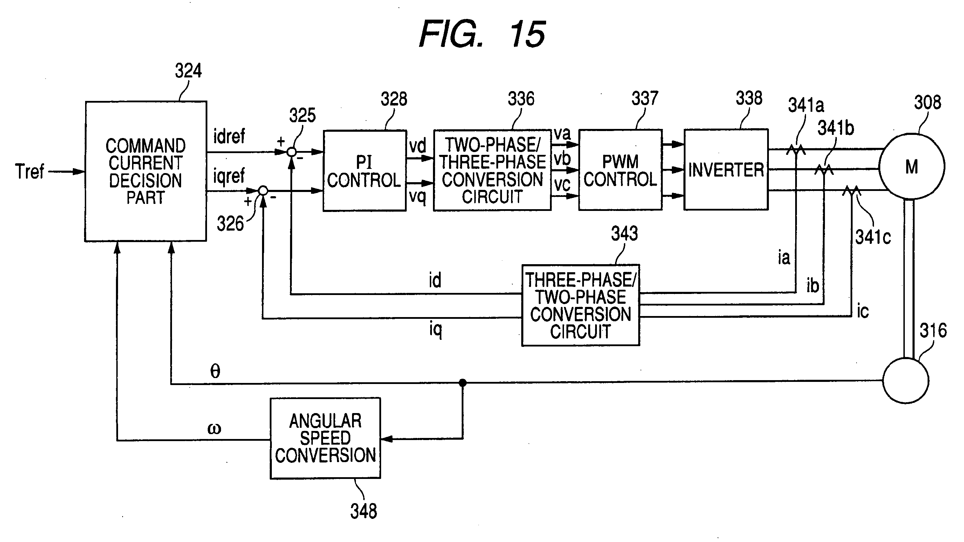

Fig. 15 shows a basic configuration of a control apparatus of the electric power steering apparatus using vector control of JP-A-2001-18822.

A current command value idref of the d axis and a current command value iqref of the q axis are calculated by command current decision part 324 based on a torque command value Tref. On the other hand, motor currents ia, ib, ic of a motor 308 are detected by current detection part 341a, 341b, 341c and the detected currents ia, ib, ic are converted into currents id, iq of the two axes of d-q by a three-phase/two-phase conversion circuit 343. Deviation currents of the feedback currents id, iq from the d axis current command value idref and the q axis current command value iqref are respectively calculated by subtraction parts 325, 326. The deviation currents are inputted to PI control part 328, and voltage command values vd, vq in which the deviation currents converge to zero are calculated. The motor 308 is a three-phase motor and the voltage command values vd, vq are converted into voltage command values va, vb, vc of three phases by a two-phase/three-phase conversion circuit 336.

PWM control part 337 generates a gate signal in which PWM control is performed based on the voltage command values va, vb, vc of three phases. An inverter 338 is driven by the gate signal generated by the PWM control part 337, and a current in which a deviation current becomes 0 is supplied to the motor 308. In addition, an angle (rotational position) θ of the motor 308 is detected by a resolver 316 and an angular speed (rotational speed) ω is calculated from the angle θ by angular speed conversion part 348 and is used in vector control.

In such vector control, flux weakening control is used in a high-speed rotation region of the motor, so that the vector control using the flux weakening control will be next described.

Vector control of the motor 308 is performed on the basis of a steering assist current command value Iref calculated based on steering torque (and vehicle speed, etc.) detected by the torque sensor 307. When this vector control is represented by a mathematical formula, it is represented as shown by the following mathematical formula 1-8 or mathematical formula 1-9. The mathematical formula 1-8 shows the case without flux weakening control (Id=0), and the mathematical formula 1-9 shows the case with flux weakening control (Id≠0).

(Mathematical formula 1-8)

$$Iq = Iref$$

$$Id = 0$$

(Mathematical formula 1-9)

$$Iq = Iref$$

$$Id \neq 0$$

On the other hand, when a motor current Is is represented by a d axis current command value Id and a q axis current command value Iq, it is represented as shown by the following mathematical formula 1-10.
(Mathematical formula 1-10)

$$Is = \sqrt{(Iq^2 + Id^2)}$$

When a steering wheel is suddenly turned back in vector control of the motor using such a current relation as a condition, the motor cannot output necessary torque and is in a region with flux weakening control. That is, the motor current Is may fall into a saturation state (duty = 100%) in the high-speed rotation region.

When the motor current is saturated, a current waveform is distorted and a torque ripple of the motor becomes large. As a result, vibration occurs in the steering wheel or abnormal sound occurs from the motor.

In the case of attempting to perform control beyond the limit of a constant torque output thus, the motor current is saturated and the torque ripple becomes large and a driver feels vibration or a sense of discomfort in a steering wheel operation.

Further, as an electric motor control apparatus for suppressing fluctuation in torque, there has been proposed an electric power steering apparatus constructed so that a command value of a compensating current for suppressing an electrical ripple occurring by distortion of back electromotive force waveform of a motor is calculated and based on a frequency characteristic map indicating frequency characteristics of a current control system of the motor and a compensating current map indicating a relation between an electrical angle and a compensating current per unit torque, current compensation values $\Delta i_{q0}$, $\Delta i_{d0}$ per unit torque are decided based on a motor electrical angle θmre corrected in order to compensate for a phase lag in the current control system and these compensation values are multiplied by a factor according to a q axis basic current command value $i^*_{q0}$ in order to proportionate amplitude of the compensating current to a motor load and thereby current compensation values $\Delta i_{q1}$, $\Delta i_{d1}$ are calculated and their compensation values are further multiplied by a correction factor Rm in order to compensate for a decrease in gain in the current control system and thereby q axis and d axis current values $\Delta i_q$, $\Delta i_d$ are calculated as compensating current command values (for example, see Japanese Patent Unexamined Publication JP-A-2004-328814).

However, in a conventional example described in the JP-A-2004-328814, a parameter of each phase is converted on dq coordinates based on the premise that the parameter of each phase is balanced, so that when there are fluctuations or variations in resistance of each phase of a motor, there is an unsolved problem that a torque ripple occurs and a steering feeling becomes worse.

In addition, there are unsolved problems that a phase lag and amplitude reduction by response of a current control system for performing PI control etc. based on a current command value and a motor current detection value cannot be avoided and a high-order harmonic of a phase current attenuates particularly in a high rotation region and this becomes a cause of torque fluctuation and output reduction.

## SUMMARY OF THE INVENTION

When the electric power steering apparatus is taken as an example, high output characteristics are also required while a small motor is required from the mounting capability. It is necessary to set the amount of d axis current largely in order to simultaneously satisfy these conflicting requests. That is, at the time of low rotation, it is a small d axis current command value but when the rotation speed increases slightly, it may become a large d axis current command value. Also, in control having switching part between flux weakening control and control without flux weakening control, the d axis current command value suddenly changes from a state of zero to a large d axis current command value.

In the case where the d axis current command value suddenly changes by a slight change of rotation speed thus, when response of a current control part is not sufficient, a torque ripple or vibration occurs by fluctuation in output torque and for the electric power steering apparatus, a driver may feel displeasure. There is also a technique for improving response of current control in order to suppress the fluctuation in output torque, but the response of current control is determined in consideration of resistance to noise or a throughput of a microcomputer, so that there is a limit and the fluctuation in output torque cannot be suppressed sufficiently.

The invention has been implemented in view of the circumstances as described above, and an object of the invention is to provide a motor drive control apparatus which has no vibration or no abnormal sound and suppresses occurrence of a torque ripple in a high-speed region of a motor even in the case of sudden turn steering etc. of a steering wheel by limiting a change in a d axis current command value so that fluctuation in output torque do not occur when a current command value or the rotation speed changes slightly at the time of d axis flux weakening control of vector control. In addition, the invention has been implemented by focusing attention on the unsolved problems of the conventional examples described above, and an object of the invention is to provide an electric motor control apparatus capable of ensuring stability while holding torque constant by suppressing attenuation of a harmonic component or a phase lag in a current control system, and an electric power steering apparatus using this electric motor control apparatus.

The invention relates to a motor drive control apparatus capable of performing flux weakening control by vector control of the d-q axes, and the object of the invention is achieved by comprising a rate-limit control part for controlling a rate of change in a d axis current command value in the vector control.

Also, the object of the invention is more effectively achieved by disposing switchingpart for switchingbetween motor control with flux weakening control and motor control without flux weakening control and suppressing a rate of change of the rate-limit control part within a range in which a current control system can perform control, or setting an upper limit of the rate of change at a limit value in which a sudden change in the rotation speed due to a sudden change in the d axis command value does not occur, or setting the rate of change in a range in which a current controlled by a current control part can sufficiently respond to a change in a phase current command value of the motor.

According to a first aspect of the invention, there is provided a motor drive control apparatus for controlling a motor, comprising:

> a main control part that performs a flux weakening control by a vector control of d-q axes; and
> a rate-limit control part that controls a rate of change in a d axis current command value in the vector control.

Further, according to a second aspect of the invention, there is provided the motor drive control apparatus as set forth in the first aspect of the invention, further comprising switching part that switches between motor control in which the flux weakening control is performed and motor control in which the flux weakening control is not performed.

According to a third aspect of the invention, there is provided the motor drive control apparatus as set forth in the first aspect of the invention, further comprising a current control system that supplies current to the motor, wherein a rate of change of the rate-limit control part is suppressed within a range in which the current control system can control.

According to a fourth aspect of the invention, there is provided the motor drive control apparatus as set forth in the third aspect of the invention, wherein an upper limit of the rate of change is a limit value in which a sudden change in a rotation speed due to a sudden change in the d axis command value does not occur.

According to a fifth aspect of the invention, there is provided the motor drive control apparatus as set forth in the third aspect of the invention, wherein the rate of change is in a range in which a current controlled by a current control part can sufficiently respond to a change in a phase current command value of the motor.

According to a sixth aspect of the invention, there is provided an electric power steering apparatus comprising:

> a motor of an electric power steering; and
> a motor drive control apparatus as set forth in the first aspect of the invention that controls the motor.

In order to achieve the object, according to a seventh aspect of the invention, there is provided an electric motor control apparatus for controlling an electric motor, comprising:

a motor angular speed detection part that detects a motor angular speed of the electric motor; and
a motor control part comprising a current control system that controls the electric motor based on a motor current and a current command value,

wherein the motor control part calculate the current command value in which torque becomes constant by considering characteristics of the current control system based on a motor angular speed detected by the motor angular speed detection part.

Also, according to an eighth aspect of the invention, there is provided an electric motor control apparatus comprising:

a motor control part comprising a current control system that controls a multi-phase electric motor having an back electromotive force including a high-order harmonic, based on a motor current and a current command value,

wherein the motor control part comprises a current command value compensation unit that calculates an amplitude compensation value and an advance angle value of a current command value of each of the harmonic components so that torque becomes constant, by considering characteristics of the current control system and compensating for a current command value of the multi-phase electric motor based on the amplitude compensation value and the compensated advance angle value.

According to this eighth aspect of the invention, current command value compensation unit computes an amplitude compensation value and an advance angle value of a current command value of each of the harmonic components so that torque becomes constant in consideration of characteristics of the current control system and compensates for a current command value of the multi-phase electric motor based on the amplitude compensation value and the compensated advance angle value, so that an output is controlled as shown in a design value and also torque fluctuation and operating noise can be reduced.

Further, according to a ninth aspect of the invention, there is provided an electric motor control apparatus comprising:

a motor control part comprising a current control system that controls a multi-phase electric motor having an back electromotive force including a high-order harmonic based on a motor current and a current command value; and
a motor angular speed detection part that detects a motor angular speed of the electric motor,

wherein the motor control part comprises current command value compensation unit that calculates an amplitude compensation value and an advance angle value of a current command value in each order harmonic component of d-q coordinates of the multi-phase motor so that torque becomes constant, by considering characteristics of the current control systembased on a motor angular speed detected by the motor angular speed detection part on d-q coordinates rotating at a frequency corresponding to the motor angular speed and compensating for a current command value of the multi-phase electric motor based on the amplitude compensation value and the compensated advance angle value.

According to this ninth aspect of the invention, it comprises current command value compensation unit for computing an amplitude compensation value and an advance angle value of a current command value in each order harmonic component of d-q coordinates of the multi-phase motor so that torque becomes constant in consideration of characteristics of the current control system based on a motor angular speed detected by the motor angular speed detection part on d-q coordinates rotating at a frequency corresponding to the motor angular speed and compensating for a current command value of the multi-phase electric motor based on the amplitude compensation value and the compensated advance angle value, so that current compensation is made on the d-q coordinates and an output is controlled as shown in a design value and also torque fluctuation and operating noise can be reduced.

Furthermore, according a tenth aspect of the invention as set forth in the eighth aspect of the invention, the current command value compensation unit comprises a control map representing a relation among an amplitude compensation gain, an advance angle value and a motor angular speed for suppressing attenuation of a harmonic component in the current control system and
the current command value compensation unit calculates the advance angle value and the amplitude compensation gain with reference to the control map based on the motor angular speed.

Moreover, according to an eleventh aspect of the invention, there is provided an electric power steering apparatus comprising:

an electric motor that generates steering assist force on a steering mechanism,

wherein the assist force is controlled by an electric motor control apparatus as set in the seventh aspects of the invention.

According to a motor drive control apparatus of the first aspect of the invention, a rate of change in a d axis current command value in vector control is controlled, so that a sudden change in the number of motor rotations can be suppressed. Also, since it is constructed so that a command value of a motor phase current after two-phase/three-phase current conversion does not cause sudden fluctuation, current control can sufficiently respond and fluctuation in torque can be prevented and occurrence of abnormal sound or vibration can be suppressed.

When the motor drive control apparatus of the invention is applied to motor control of electric power steering, even in the case of sudden turn steering etc. of a steering wheel, occurrence of a torque ripple in a high-speed region of a motor can be suppressed and vibration or abnormal sound is not transmitted to the steering wheel and in addition, high performance without having a discomfortable feeling in a steering wheel operation can be obtained.

In addition, in accordance with the seventh aspect of the invention, a current command value in which torque becomes constant is calculated in consideration of characteristics of a current control system based on a motor angular speed, so that an actual motor current actually supplied to an electric motor is substantially matched with an ideal current and a desired output can be obtained and also reduction in operating noise and torque fluctuation can be achieved and, for example, in the case of being applied to an electric power steering apparatus, effects capable of obtaining good steering performance and steering feeling are obtained.

Also, in accordance with the eighth aspect of the invention, current command value compensation unit computes an amplitude compensation value and an advance angle value of a current command value of each of the harmonic components so that torque becomes constant and compensates for a current command value of the multi-phase electric motor based on the amplitude compensation value and the compensated advance angle value, so that an output is controlled as shown in a design value and also torque fluctuation and operating noise can be reduced.

Further, in accordance with the tenth aspect of the invention, it comprises current command value compensation unit for computing an amplitude compensation value and an advance angle value of a current command value in each order harmonic component of d-q coordinates of the multi-phase motor so that torque becomes constant based on a motor angular speed detected by motor angular speed detection part on d-q coordinates rotating at a frequency corresponding to the motor angular speed and compensating for a current command value of the multi-phase electric motor based on the amplitude compensation value and the compensated advance angle value, so that current compensation is made on the d-q coordinates and an output is controlled as shown in a design value and also torque fluctuation and operating noise can be reduced.

Furthermore, in accordance with the tenth aspect of the invention, an amplitude compensation gain and an advance angle value are calculated with reference to a control map based on a motor angular speed, so that the amplitude compensation gain and the advance angle value in consideration of characteristics of a current control system can be calculated accurately and easily and good current compensation control can be performed.

Moreover, in accordance with the eleventh aspect of the invention, it is applied as an electric motor control apparatus of an electric power steering apparatus, so that desired steering assist force can be generated and also reduction in operating noise and torque fluctuation can be achieved and good steering performance and steering feeling can be obtained.

BRIEF DESCRIPTION OF THE DRAWINGS

Fig. 1 is a block diagram showing a configuration example of a motor drive control apparatus forming a premise of the invention;
Fig. 2 is a characteristic diagram showing a relation among a motor rotational speed, a motor current command value and a motor current command limit value;
Fig. 3 is a characteristic diagram showing a relation among a motor rotational speed, a motor current command value and a motor current command limit value in the case of Ireft≤Iqa;
Fig. 4 is a characteristic diagram showing a relation among a motor rotational speed, a motor current command value and a motor current command limit value in the case of Iqa<Ireft≤Iqb;
Fig. 5 is a characteristic diagram showing a relation among a motor rotational speed, a motor current command value and a motor current command limit value in the case of Iqb<Ireft;
Fig. 6 is a diagram describing an output method of a d axis current;
Fig. 7 is a diagram showing a conventional control characteristic example;
Fig. 8 is a block configuration diagram showing a basic configuration example of the invention;
Fig. 9 is a diagram describing a principle of the invention;
Fig. 10 is a diagram showing a characteristic example of the invention;
Fig. 11 is a flowchart showing an action example of the invention;
Fig. 12 is a configuration diagram of a general electric power steering apparatus;
Fig. 13 is a diagram showing a T-n characteristic of a motor;

Fig. 14 is a diagram showing motor characteristics and a necessary motor load characteristic with the characteristics superimposed;

Fig. 15 is a block diagram showing a configuration example of a conventional vector control apparatus;

Fig. 16 is the whole configuration diagram showing a second embodiment of the invention;

Fig. 17 is a block diagram showing one example of a steering assist control device;

Fig. 18 is a block diagram showing a specific configuration of a control computation device 1023 of Fig. 17;

Fig. 19 is a characteristic diagram showing a steering assist current command value calculation map;

Fig. 20 is a block diagram showing a specific configuration of a current command value limit part of Fig. 18;

Fig. 21 is a characteristic diagram showing a d axis current command value DC component calculation map representing a relation between a d axis current command value DC component $i_{dDC}$ and a current command value $I_{ref}$' after limitation;

Fig. 22 is ablock diagram showing a specific configuration of an each order harmonic component advance angle and amplitude compensation computation part of Fig. 18;

Figs. 23A and 23B are characteristic diagrams showing control maps for calculating a d axis current command value advance angle value;

Figs. 24A and 24B are characteristic diagrams showing control maps for calculating a sixth-order d axis current command value amplitude compensation gain;

Figs. 25A and 25B are characteristic diagrams showing control maps for calculating a q axis current command value advance angle value;

Figs. 26A and 26B are characteristic diagrams showing control maps for calculating a sixth-order q axis current command value amplitude compensation gain;

Fig. 27 is a characteristic diagram showing a control map for calculating a DC current command value amplitude compensation gain;

Fig. 28 is ablock diagram showing a specific configuration of a target current setting part showing a third embodiment of the invention;

Fig. 29 is a characteristic diagram showing a control map for calculating an advance angle value of each order component in the third embodiment; and

Fig. 30 is a control map for calculating an amplitude compensation gain in the third embodiment.

## DETAILED DESCRIPTION OF THE PREFERRED EMBODIMENTS

[FIRST EMBODIMENT]

At first, a first embodiment according to the first through sixth aspects of the invention will be described. General description of motor control forming a premise of the invention will be made.

A map (data table) for defining a relation of a d axis current/q axis current, a motor rotational speed/q axis current and the amount of d axis current for flux weakening control necessary to satisfy required assistance power (required assist torque versus rotation speed characteristic) is previously created off-line using parameters such as a motor resistance value or an inductance value, an internal resistance value of a controller (control unit or ECU). Then, value and output timing of a d axis current are determined while referring to the map according to a detectedmotor rotational speed, a battery voltage, a current command value, etc. at the time of on-line control.

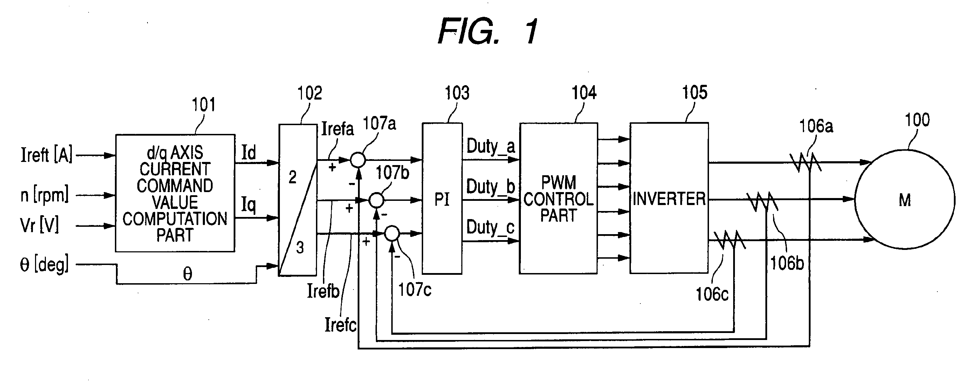

That is, Fig. 1 shows its configuration example and is constructed so as to drive a three-phase brushless motor 100 by PWM. A current command value Ireft from a steering assist current command value computation part 1031 (which is described later in detail), a motor rotational speed n and a voltage Vr (battery voltage) applied to an inverter 105 are inputted to a d/q axis current command value computation part 101, and a d axis current command value Id and a q axis current command value Iq computed by the d/q axis current command value computation part 101 are inputted to a two-phase/three-phase current conversion part 102 together with the motor electrical angle θ. Three-phase current command values Irefa, Irefb, Irefc from the two-phase/three-phase current conversion part 102 are respectively inputted to a PI control part 103 through subtraction parts 107a, 107b, 107c, and the PI control part 103 obtains duties Duty_a, Duty_b, Duty_c by a predetermined formula according to respective computation results of the subtraction parts 107a, 107b, 107c, and a PWM control part 104 generates PWM signals according to the duties Duty_a, Duty_b, Duty_c, and the inverter 105 drives the three-phase brushless motor 100 by the PWM signals. Currents of the three-phase brushless motor 100 are detected by a current detectors 106a, 106b, 106c and the detected currents are respectively fed back to the subtraction parts 107a, 107b, 107c. Then, the d/q axis current command value computation part 101 is constructed so as to obtain the d axis current command value Id and the q axis current command value Iq so that the duties Duty_a, Duty_b, Duty_c are not saturated.

Also, the d/q axis current command value computation part 101 has at least three maps (characteristic curves) predefined by off-line calculation, and the features are represented as shown in the following (1) to (3).

(1) First map (map for current command limit value of the case without flux weakening control)

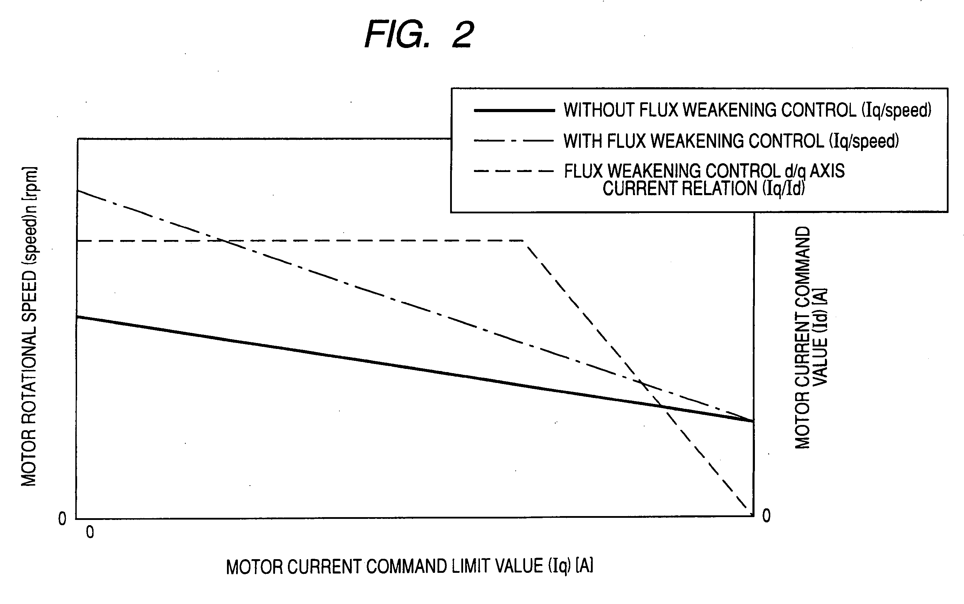

A current command limit value changes by amotor rotational speed n and the line (characteristic curve without flux weakening control of Fig. 2) of current command limit value Iq/motor seed n indicates duty 100%. In this case, a d axis current command value Id is zero.

(2) Second map (map for current command limit value of the case with flux weakening control)

A current command limit value changes by amotor rotational speed n and the line (characteristic curve with flux weakening control of Fig. 2) of current command limit value Iq/motor speed n indicates duty 100%. The reason why a characteristic increases as compared with the characteristic curve of the case without flux weakening control is, because the motor rotational speed n can be increased by applying a d axis current (Id). (3) Third map (map for d axis current command value decision)

A current command limit value of the case with flux weakening control is inputted and a corresponding value is set at a d axis current command value Id (flux weakening control d/q axis current relation curve of Fig. 2).

Using the first to third maps, the following computation is executed on-line. A motor rotational speed n and a current command value (Ireft) from steering assist current command value computation part 1031 (which is described later) are first detected. The detected motor rotational speed n is applied to the axis of ordinate of Fig. 2 and a line parallel to the axis of abscissa is drawn from its point. Based on a relation to the current command value (Ireft), a point of intersection between the parallel line and the characteristic curve with flux weakening control and a point of intersection between the parallel line and the characteristic curve without flux weakening control, a d axis current command value Id and a q axis current command value Iq are outputted as shown in a table1.

[Table 1]

|  | Iq | Id |
|---|---|---|
| Ireft ≤ Iqa (Fig. 3) | Iq=Ireft | Id=0 |
| Iqa < Ireft ≤ Iqb (Fig. 4) | Iq=Ireft | Id=F(Iqb) |
| Iqb < Ireft (Fig. 5) | Iq=Iqb | Id=F(Iqb) |

In Table 1, "Iqa" is a q axis current command value at a point of intersection between the parallel line and the characteristic curve without flux weakening control,
"Iqb" is a q axis current command value at a point of intersection between the parallel line and the characteristic curve with flux weakening control, and
F() is a function of a d/q axis current relation (flux weakening control d/q axis current relation of Fig. 2).

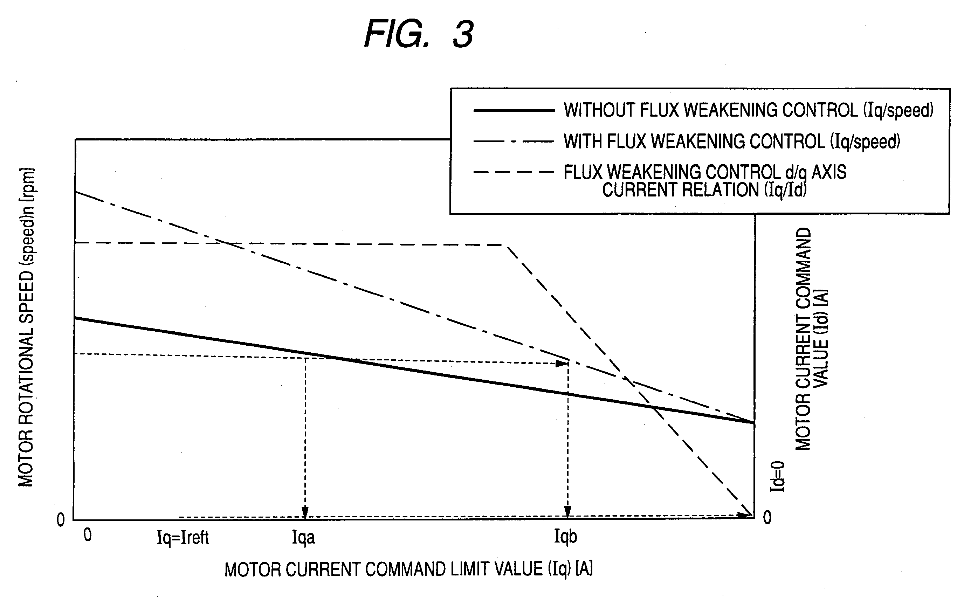

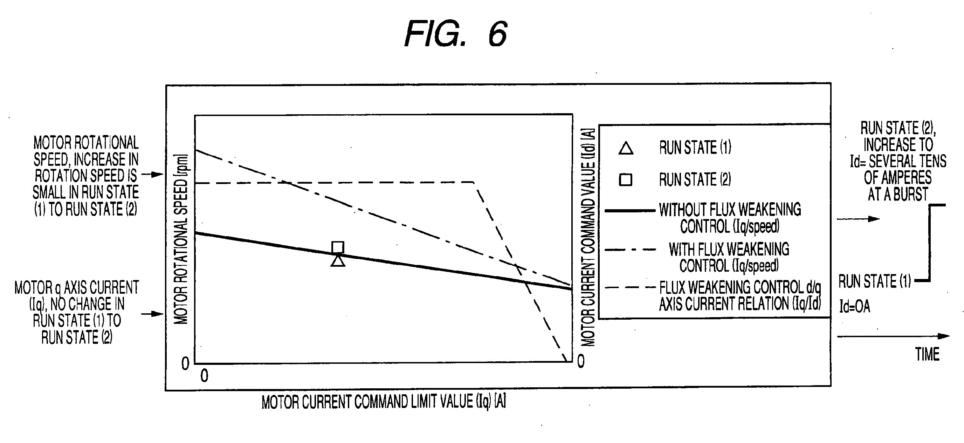

Fig. 3 shows a relation among a motor rotational speed, a motor current command value and a motor current command limit value in the case of "Ireft ≤ Iqa".

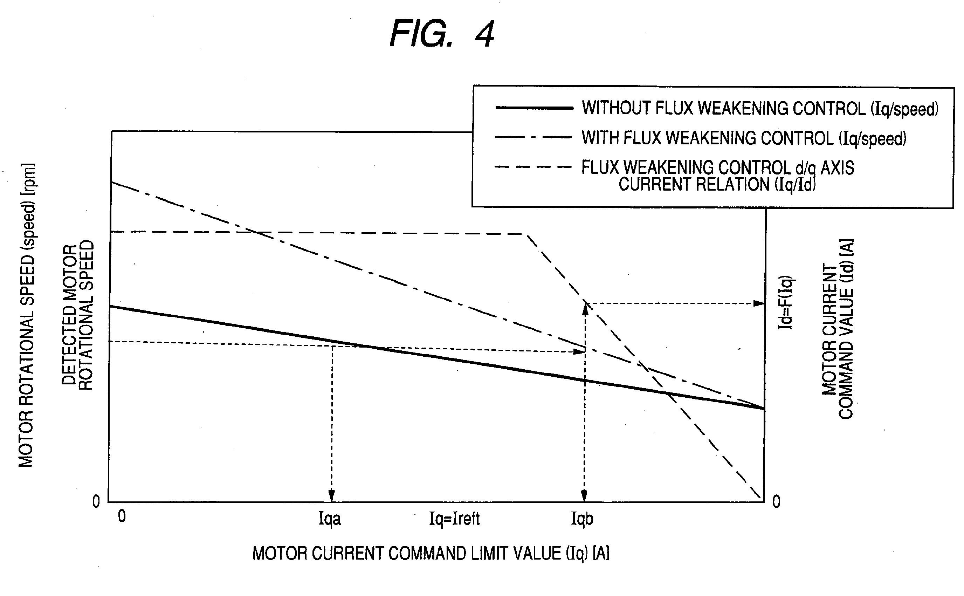

Fig. 4 shows a relation among a motor rotational speed, a motor current command value and a motor current command limit value in the case of "Iqa < Ireft ≤ Iqb".

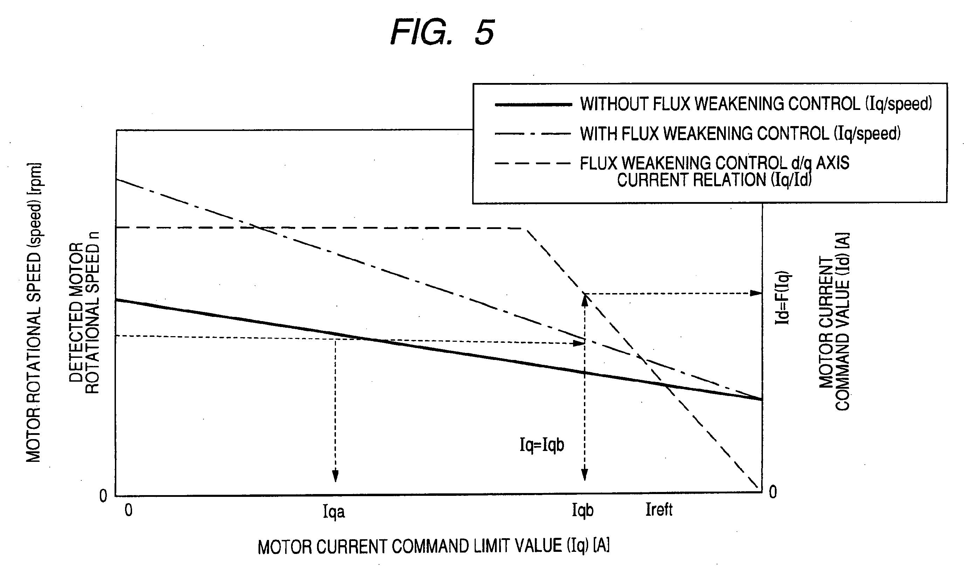

Fig. 5 shows a relation among a motor rotational speed, a motor current command value and a motor current command limit value in the case of "Iqb < Ireft".
An output of a d axis current command value Id in computation of the table 1 is implemented as shown in Fig. 6 showing a d axis current output method. That is, △ of the lower side of a characteristic without flux weakening control shows a run state (1) and □ of the upper side of the characteristic without flux weakening control shows a run state (2) and at the transition from the run state (1) to the run state (2), an increase in the number n of rotations of a motor becomes small and a motor q axis current command value Iq does not change. In the run state (1) in which a request output is satisfied even in without flux weakening control, the d axis current command value Id is 0 as a state without flux weakening control. In the run state (2), the d axis current command value Id obtained by the flux weakening control d/q axis current relation curve is used as a state with flux weakening control, but a steep current with a large value of several tens of amperes at a burst at this time may be outputted. In this case, though a motor speed increases only a few, the d axis current command value Id increases stepwise from 0 ampere to a large value. From this, the following phenomenon probably occurs.

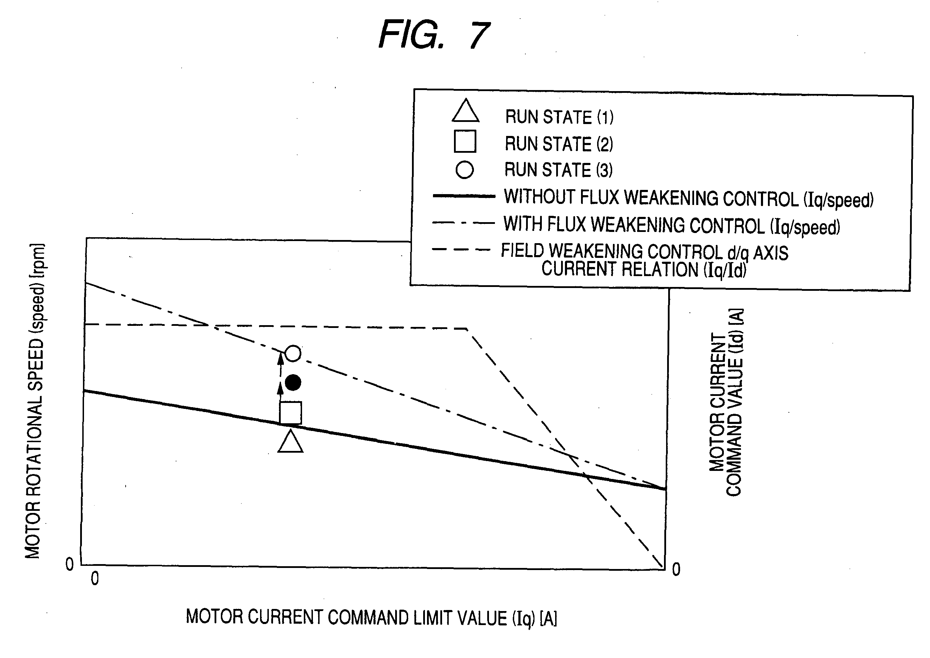

   (a) As shown in Fig. 7, the d axis current command value Id suddenly changes from 0 ampere to a large value at the time of transition from the run state (1) to the run state (2) and thereby, a rotational speed n can be increased to a run state (3) shown by O. That is, at this rate, the rotational speed n may increase from the run state (1) to the run state (3) at a burst. In the electric power steering apparatus, this becomes a factor in giving a sense of discomfort to a driver.

(b) The d axis current command value Id suddenly changes from 0 ampere to a large value at the time of transition from the run state (1) to the run state (2) and thereby, a phase current command value of the back of the two-phase/three-phase current conversion part 102 also varies suddenly and current feedback control (PI control part 103) cannot follow (or control cannot be performed) and a motor current cannot instantaneously follow the current command value and fluctuation in output torque are caused and thereby, vibration or abnormal sound occurs in a motor.

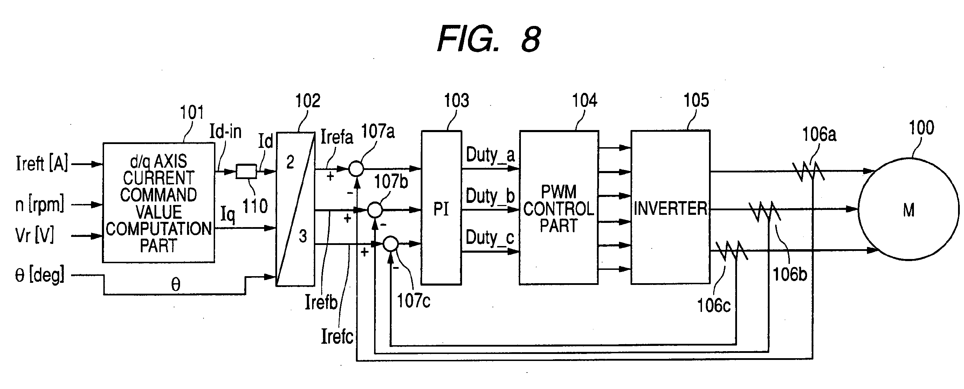

The invention is implemented based on the premise described above, and is provided with a rate-limit control part 110 for controlling a rate of change (the amount of change per constant control period or unit time) in the d axis current command value Id at a rate of change preset properly as shown in Fig. 8. That is, the rate-limit control part 110 limits a rate of change in the d axis current command value Id so as to be suppressed within a range in which a current control system can perform control.

In control of a rate of change in the d axis current command value Id in the invention, a rate of change in the d axis current command value Id (Id of Fig. 2) computed and outputted from the d/q axis current command value computation part 101 is controlled to a predetermined value or less. Here, when it is assumed that Id_in is a d axis current command value of the front of the rate-limit control part 110 and a d axis current command value Id is a d axis current command value of the back of the rate-limit control part 110 and D is a change rate limit value of a d axis current command value Id and $\Delta t$ is sampling time, the following mathematical formula 1-11 holds. A rate of change in the d axis current command value can be set to the change rate limit value or less by being constructed as shown by the following mathematical formula 1-11.

$$(\text{Mathematical formula 1-11})$$

$$\text{Id}(k) = \text{Id}(k-1) + D\Delta t \quad [\text{Id\_in}(k) - \text{Id}(k-1) \geq D\Delta t]$$

$$\text{Id}(k) = \text{Id\_in}(k) \quad [-D\Delta t < \text{Id\_in}(k) - \text{Id}(k-1) < D\Delta t]$$

$$\text{Id}(k) = \text{Id}(k-1) - D\Delta t \quad [\text{Id\_in}(k) - \text{Id}(k-1) \leq -D\Delta t]$$

where Id(k-1) is an output of the rate-limit control part 110 at the time of the previous sampling and Id(k) is an output of the rate-limit control part 110 at the time of the this sampling.

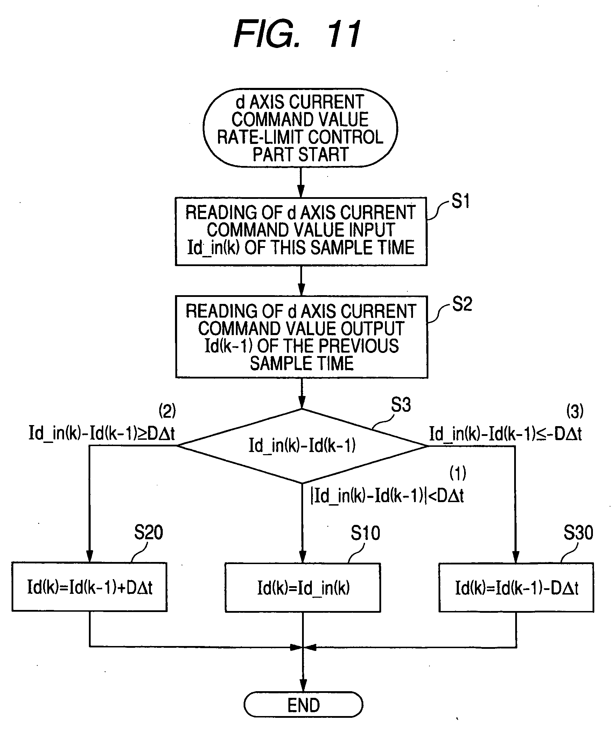

The rate-limit control part 110 executes the mathematical formula 1-11 by, for example, software processing shown in Fig. 11. That is, a d axis current command value input Id_in(k) of this sample time is first read (step S1) and a d axis current command value input Id(k-1) of the previous sample time is read (stepS2). Then, a change amount {Id_in(k)-Id(k-1)} is obtained and also a magnitude relation between the change amount and a change amount limit value $\pm D\Delta t$ per unit time is determined (step S3). Then, when the change amount {Id_in(k)-Id(k-1)} is within the change amount limit value $\pm D\Delta t$, this d axis current command value Id(k) is set at "Id_in(k)" (step S10) and when the change amount {Id_in(k)-Id(k-1)} is larger than the change amount limit value + D$\Delta t$, this d axis current command value Id(k) is set at "Id_in(k)+D$\Delta t$" (step S20) and when the change amount {Id_in(k)-Id(k-1)} is smaller than the change amount limit value -D$\Delta t$, this d axis current command value Id(k) is set at "Id_in(k) -D$\Delta t$" (step S30). By performing the processing thus, the change amount {Id_in(k)-Id(k-1)} does not exceed the range of the change amount limit value $\pm D\Delta t$.

The change rate limit value D could be set so as to suppress a rate of change in the d axis current command value Id to the extent to which a sudden change in the number n of rotations due to a sudden change in the d axis current command value Id does not occur. Or, the change rate limit value D could be set so as to suppress a rate of change in the d axis current command value Id so that a change in a phase current command value after the two-phase/three-phase current conversion part 102 settles to the extent to which a current controlled by a current control part can sufficiently respond to the change in its phase current command value.

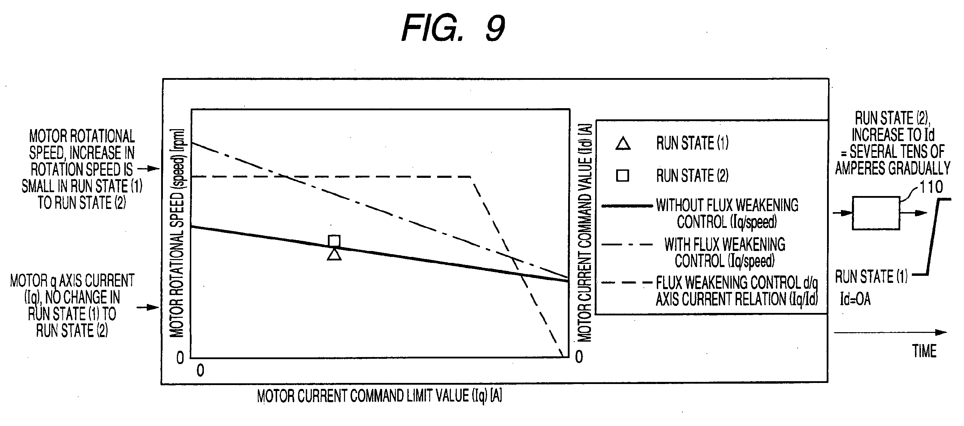

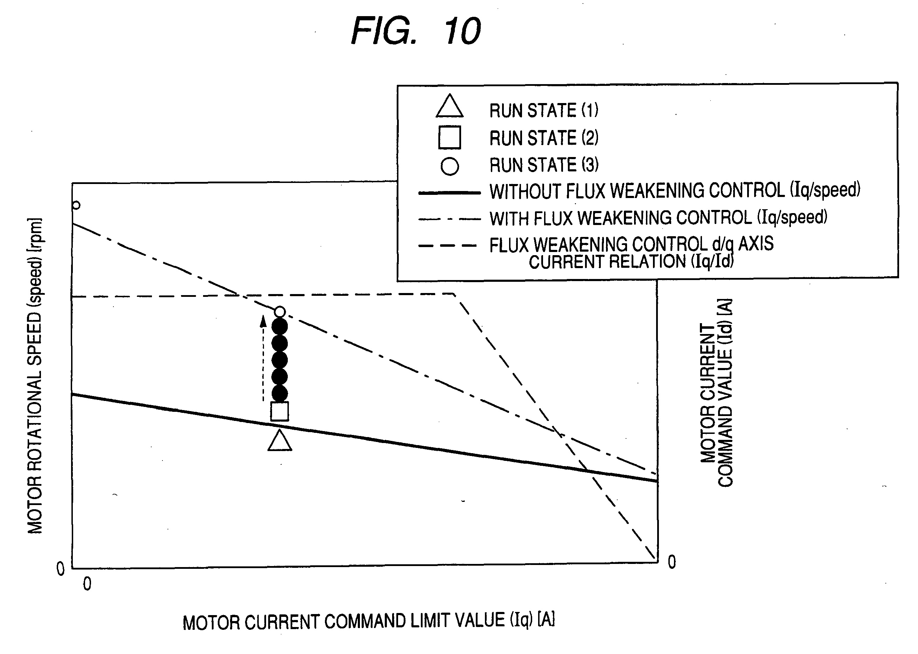

Fig. 9 shows a principle of the invention in correspondence with Fig. 6, and a change in the d axis current command value Id in the run state (2) is gradually increased to several tens of amperes. As a result of this, as shown in Fig. 10, transition from the run state (2) to the run state (3) does not change steeply because the d axis current command value Id does not change steeply. Therefore, fluctuation in torque caused by a motor can be prevented and occurrence of abnormal sound or vibration can be suppressed.

In the first embodiment described above, the example of applying the invention to control having switching part for switching between flux weakening control and control without field weakening has been described, but the invention can also be applied to control in which flux weakening control is always performed. For example, when a d axis current is set so as to change according to a current command value Iref from a torque system or the number of motor rotations, fluctuation in output torque may occur as described above, so that change rate limit control of the invention is required. Also, the motor drive control apparatus described above can be used with the motor drive control apparatus mounted in an electric power steering apparatus.

[SECOND EMBODIMENT]

Next, second and third embodiments according to the seventh to eleventh aspects of the invention will be described below based on the drawings.

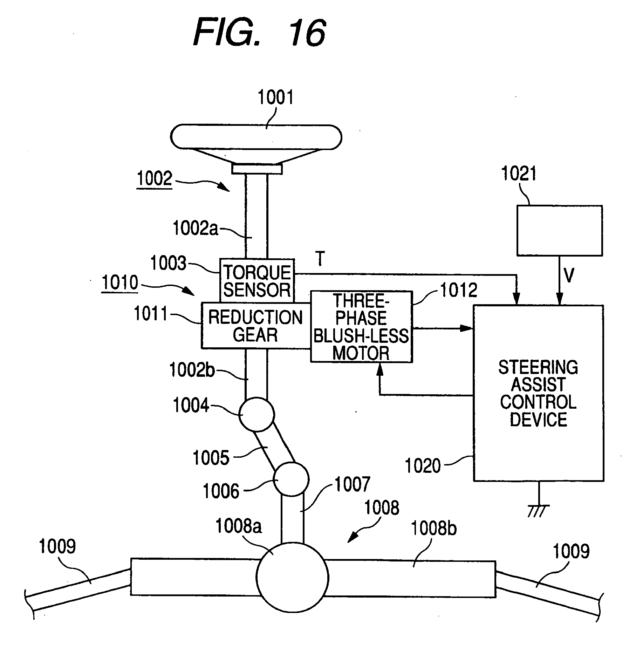

Fig. 16 is the whole configuration diagram showing one embodiment of the case of applying the invention to an electric power steering apparatus, and in Fig. 16, numeral 1001 is a steering wheel, and steering force generated by driver's steering operation of the steering wheel 1001 is transmitted to a steering shaft 1002 having an input shaft 1002a and an output shaft 1002b. In this steering shaft 1002, one end of the input shaft 1002a is joined to the steering wheel 1001 and the other end is joined to one end of the output shaft 1002b through a steering torque sensor 1003 acting as steering torque detection part.

Then, the steering force transmitted to the output shaft 1002b is transmitted to a lower shaft 1005 through a universal joint 1004 and is further transmitted to a pinion shaft 1007 through a universal joint 1006. The steering force transmitted to this pinion shaft 1007 is transmitted to tie rods 1009 through a steering gear 1008 and front wheels (not shown) are steered. Here, the steering gear 1008 is constructed in a rack and pinion form having a pinion 1008a joined to the pinion shaft 1007 and a rack 1008b meshing with this pinion 1008a, and rotational movement transmitted to the pinion 1008a is converted into linear movement by the rack 1008b.

A steering assist mechanism 1010 for transmitting steering assist force to the output shaft 1002b is joined to the output shaft 1002b of the steering shaft 1002. This steering assist mechanism 1010 comprises a reduction gear 1011 joined to the output shaft 1002b and a three-phase brush-less motor 1012 for generating the steering assist force joined to this reduction gear 1011.
The steering torque sensor 1003 detects steering torque transmitted to the input shaft 1002a by being given to the steering wheel 1001 and, for example, is constructed so that steering torque is converted into a torsion angle displacement of a torsion bar (not shown) interposed between the input shaft 1002a and the output shaft 1002b and this torsion angle displacement is converted into a resistance change or a magnetic change and is detected.

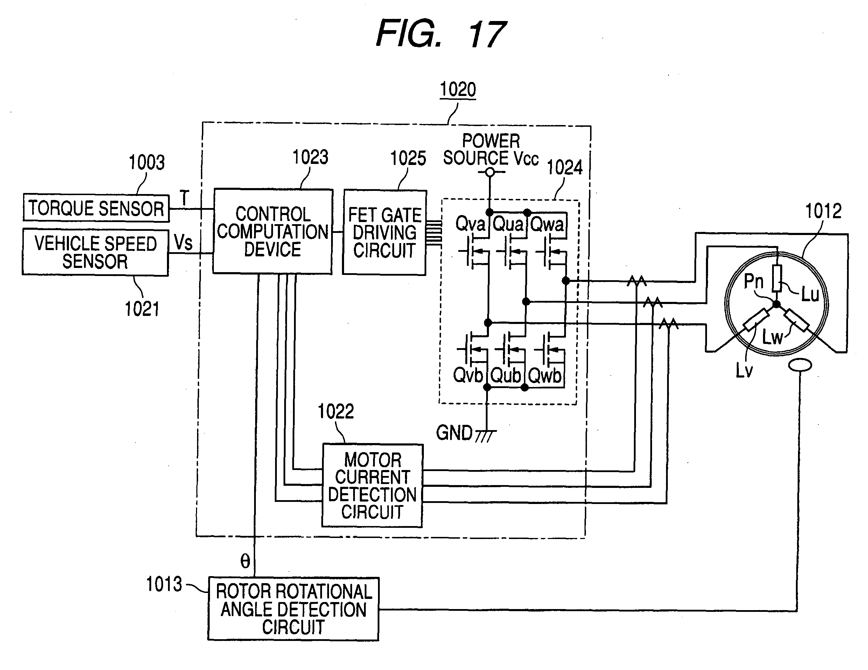

Also, as shown in Fig. 17, in the three-phase brush-less motor 1012, one ends of a U-phase coil Lu, a V-phase coil Lv and a W-phase coil Lw are mutually connected to form a star connection and the other ends of each of the coils Lu, Lv and Lw are connected to a steering assist control device 1020 acting as motor control part and motor driving currents Iu, Iv and Iw are supplied individually. Also, the three-phase brush-less motor 1012 comprises a rotor position detection circuit 1013 constructed of an encoder, a resolver, etc. for detecting a rotational position of a rotor.

As shown in Fig. 17, steering torque T detected by the steering torque sensor 1003 and a vehicle speed detection value Vs detected by a vehicle speed sensor 1021 are inputted to the steering assist control device 1020 and also a rotor rotational angle θ detected by the rotor position detection circuit 1013 is inputted to the steering assist control device 1020 and further motor driving current detection values Iud, Ivd and Iwd outputted from a motor current detection circuit 1022 for detecting the motor driving currents Iu, Iv and Iw supplied to each of the phase coils Lu, Lv and Lw of the three-phase brush-less motor 1012 are inputted to the steeringassist control device 1020.

This steering assist control device 1020 comprises a control computation device 1023 for outputting motor voltage command values Vu, Vv and Vw by computing a steering assist target current value based on the steering torque T, the vehicle speed detection value Vs, the motor current detection values Iud, Ivd and Iwd and the rotor rotational angle θ, a motor driving circuit 1024 constructed of field effect transistors (FETs) for driving the three-phase brush-less motor 1012, and an FET gate driving circuit 1025 for controlling gate currents of the field effect transistors of the motor driving circuit 1024 based on the phase voltage command values Vu, Vv and Vw outputted from the control computation device 1023.

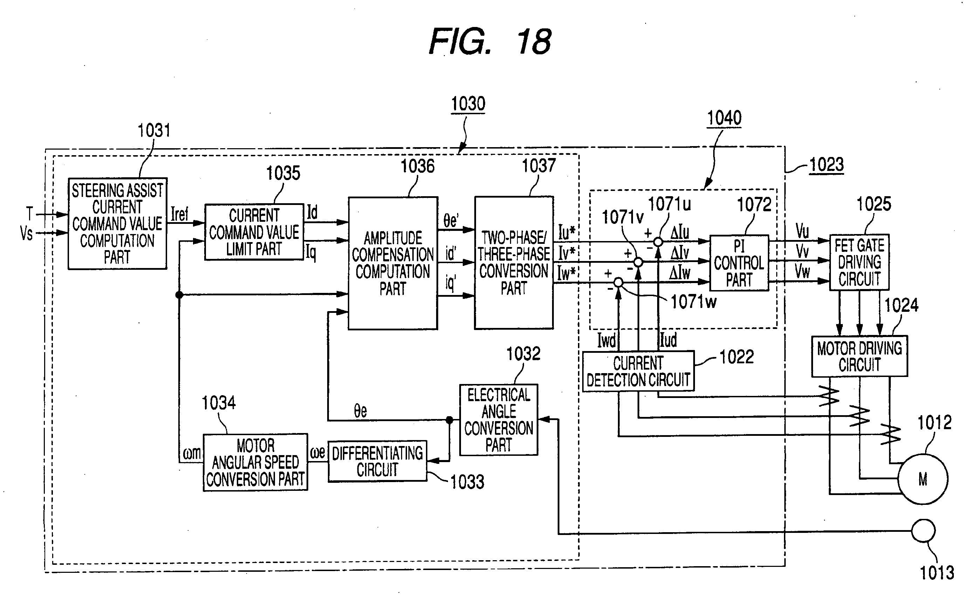

As shown in Fig. 18, the control computation device 1023 comprises a target current setting part 1030 for deciding target current values $i_d'$, $i_q'$ by making amplitude compensation and advance angles of vector control d and q components of each order harmonic component including a fundamental wave component in consideration of attenuation of each order harmonic component in a current control system, that is, a current control part 1040 in order to drive the three-phase brush-less motor 1012 so as not to cause fluctuation in torque using good characteristics of vector control and then converting these target current values $i_d'$, $i_q'$ into each of the phase target current values Iu*, Iv* and Iw* corresponding to each of the exciting coils Lu, Lv and Lw and outputting the target current values, and the current control part 1040 for performing current feedback processing by the motor current detection values Iud, Ivd and Iwd detected in the motor current detection circuit 1022 and each of the phase current command values Iu*, Iv* and Iw* outputted from this target current setting part 1030 and outputting the phase voltage command values Vu, Vv and Vw to the FET gate driving circuit 1025.

The target current setting part 1030 is constructed as shown in Fig. 18. That is, the target current setting part 1030 comprises a steering assist current command value computation part 1031 for inputting steering torque T detected by the steering torque sensor 1003 and a vehicle speed detection value Vs detected by the vehicle speed sensor 1021 and calculating a steering assist current command value $I_{ref}$ based on the torque T and the value Vs, an electrical angle conversion part 1032 for converting a rotor rotational angle $\theta$ detected by the rotor rotational angle detection circuit 1013 into an electrical angle $\theta_e$, a differentiating circuit 1033 for differentiating the electrical angle $\theta_e$ outputted from this electrical angle conversion part 1032 and calculating an electrical angular speed $\omega_e$, a motor angular speed conversion part 1034 acting as motor angular speed detection part for dividing the electrical angular speed $\omega_e$ outputted from this differentiating circuit 1033 by the number p of motor pole pairs and calculating a motor angular speed $\omega_m$, a current command value limit part 1035 for computing a d axis current command value $I_d$ constructed of amplitudes $i_{d6}$ to $i_{d6n}$ of 6nth-order current command value components and a d axis current command value DC component $I_{dDC}$ and a q axis current command value $I_q$ constructed of amplitudes $i_{q6}$ to $i_{q6n}$ of 6nth-order current command value components and a q axis current command value DC component $I_{qDC}$ in a rotating d-q axes orthogonal coordinate system in which a direction of a magnetic field component of a current flowing through the three-phase brush-less motor 1012 based on the motor angular speed $\omega_m$ and the steering assist current command value $I_{ref}$ outputted from the steering assist current command value computation part 1031 is set in the d axis and a direction of a torque current component is set in the q axis orthogonal to the d axis, an each order harmonic component advance angle and amplitude compensation computation part 1036 acting as current command value compensation unit for calculating a d axis current command value $i_d$' after compensation, a q axis current command value $i_q$' after compensation and an electrical angle $\theta_e$' after advance angle by making amplitude compensation and an advance angle of each order harmonic component including a fundamental wave component based on the electrical angle $\theta_e$, the motor angular speed $\omega_m$, the d axis current command value $I_d$ and the q axis current command value $I_q$ outputted from this current command value limit part 1035, and a two-phase/three-phase conversion part 1037 for converting the d axis current command value $i_d$' after compensation and the q axis current command value $i_q$' after compensation into three-phase current command values Iu*, Iv* and Iw* based on the electrical angle $\theta_e$' after advance angle computed by this advance angle and amplitude compensation computation part 1036.

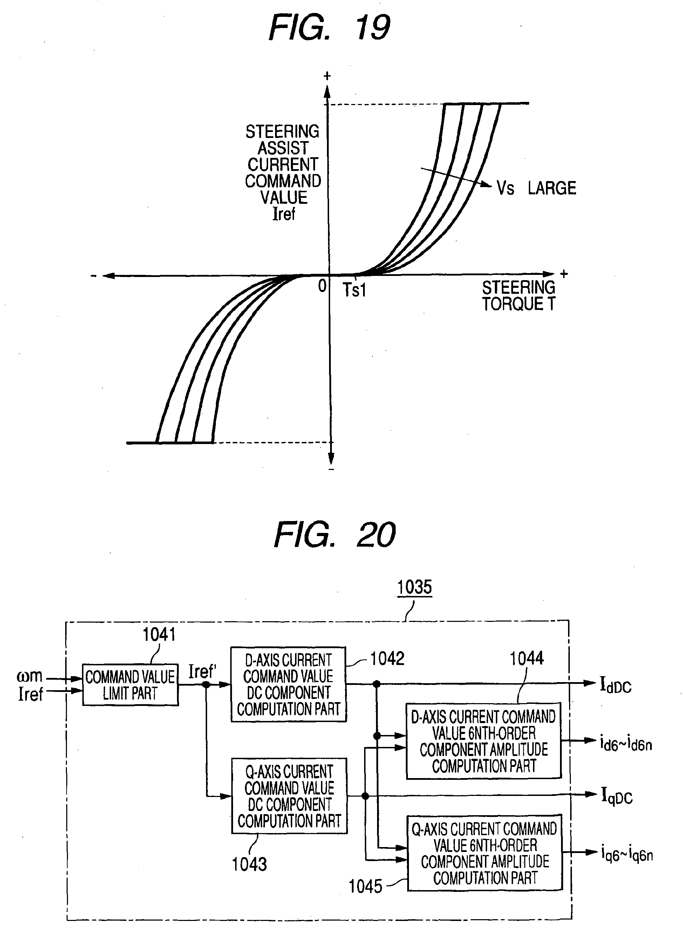

The steering assist current command value computation part 1031 described above calculates the steering assist current command value $I_{ref}$ with reference to a steering assist current command value calculation map shown in Fig. 19 based on the steering torque T and the vehicle speed detection value Vs. Here, in the steering assist current command value calculation map, the steering torque T is used as the axis of abscissa and the steering assist current command value $I_{ref}$ is used as the axis of ordinate and also the map is constructed of a characteristic diagram represented by a parabolic curve using the vehicle speed detection value Vs as a parameter as shown in Fig. 19. Then, it is set so that in the range from the steering torque T of "0" to a set value Ts1 of its vicinity, the steering assist current command value $I_{ref}$ maintains "0" and when the steering torque T exceeds the set value Ts1, the steering assist current command value $I_{ref}$ first increases relatively gradually with respect to an increase in the steering torque T but when the steer ing torque T increases more, the steering assist current command value $I_{ref}$ increases steeply with respect to its increase, and a plurality of the characteristic curves are set so that the inclination becomes small as a vehicle speed increases.

The current command value limit part 1035 has a command value limit part 1041 for inputting the motor angular speed $\omega_m$ outputted from the motor angular speed conversion part 1034 and the steering assist current command value $I_{ref}$ calculated by the steering assist current command value computation part 1031 and limiting an upper limit value of the steering assist current command value $I_{ref}$ based on the motor angular speed $\omega_m$ and also generating a d axis command value and a q axis command value on d-q coordinates in which motor torque is held constant as shown in Fig. 20. Also, the current command value limit part 1035 has a d axis current command value DC component computation part 1042 for calculating the d axis current command value DC component $I_{dDC}$ based on a limited command value outputted from the command value limit part 1041, and a q axis current command value DC component computation part 1043 for calculating the q axis current command value DC component $I_{qDC}$ based on a limited command value outputted from the command value limit part 1041 similarly.

Further, the current command value limit part 1035 comprises a d axis current command value 6nth-order component amplitude computation part 1044 for calculating amplitudes $i_{d6}$ to $i_{d6n}$ of d axis current command value 6nth-order components based on the d axis current command value DC component $I_{dDC}$ calculated by the d axis current command value DC component computation part 1042 and the q axis current command value DC component $I_{qDC}$ calculated by the q axis current command value DC component computation part 1043, and a q axis current command value 6nth-order component amplitude computation part 1045 for calculating amplitudes $i_{q6}$ to $i_{q6n}$ of q axis current command value 6nth-order components based on the d axis current command value DC component $I_{dDC}$ and the q axis current command value DC component $I_{qDC}$ similarly.

Then, the d axis current command value DC component $I_{dDC}$ and the d axis current command value 6nth-order components $i_{d6}$ to $i_{d6n}$ outputted from the d axis current command value DC component computation part 1042 and the d axis current command value 6nth-order component amplitude computation part 1044 are outputted as a d axis current command value $I_d$ in a format represented by the following formula (2-1).

Also, the q axis current command value DC component $I_{qDC}$ and the q axis current command value 6nth-order components $i_{q6}$ to $i_{q6n}$ outputted from the q axis current command value DC component computation part 1043 and the q axis current command value 6nth-order component amplitude computation part 1045 are outputted as a q axis current command value $I_q$ in a format represented by the following formula (2-2).

$$I_d = [I_{dDC} \quad i_{d6} \quad ...... \quad i_{d6n}] \qquad ......... \quad (2-1)$$

$$I_q = [I_{qDC} \quad i_{q6} \quad ...... \quad i_{q6n}] \qquad ......... \quad (2-2)$$

Here, in the current command value limit part 1035, the d axis current command value DC component $I_{dDC}$, the d axis current command value 6nth-order components $i_{d6}$ to $i_{d6n}$ and the q axis current command value DC component $I_{qDC}$, the q axis current command value 6nth-order components $i_{q6}$ to $i_{q6n}$ in which motor torque is held constant are calculated as follows.

A torque constant formula can be represented by the following formula (2-3) from an energy balance equation of the motor.

$$(2/3)K_t I_{ref} \omega_m = i_q e_q + i_d e_d \qquad ......... \quad (2-3)$$

where $K_t$ is a torque constant,
$I_{ref}$ is a current command value from a torque system,
$\omega_m$ is a motor rotational speed (mechanical angle),
$i_q$ is a q axis current,
$i_d$ is a d axis current,
$e_q$ is a q axis motor back electromotive force and
$e_d$ is a d axis motor back electromotive force.

Here, the motor back electromotive forces $e_q$ and $e_d$ are speed dependent and when it is assumed that back electromotive forces per 1 rad/sec of the dq axis are $E_d$ and $E_q$, the motor back electromotive forces are represented by the following formulas,

$$e_q = E_q \omega_m \qquad ......... \quad (2-4)$$

$$e_d = E_d \omega_m \qquad ......... \quad (2-5)$$

so that these formulas are substituted into the formula (2-3) and are rewritten, they are represented as shown by the following formula.

$$i_q = \{(2/3)K_t I_{ref} - E_d i_d\}/E_q \qquad ......... \quad (2-6)$$

A back electromotive forces $e_a$ of, for example, a-phase of the motor is represented by the following formula (2-7) when a high-order component is included.

$$e_a = E_a\omega_m = E_1\omega_m sin(\omega_e t) + E_3\omega_m sin(3\omega_e t) + E_5\omega_m sin(5\omega_e t) +$$

$$E_7\omega_m sin(7\omega_e t) + \ldots\ldots \ldots\ldots (2-7)$$

where $E_a$ is a back electromotive force per 1 rad/sec of the a-phase.
$E_1$, $E_3$, $E_5$, $E_7$..... are back electromotive force coefficients of 1, 3, 5, 7,..... components per 1 rad/sec and $\omega_e$ is a motor electrical angular speed.
For b-phase and c-phase, they are only shifted by 120° of phase relative to the case of a-phase, so that the description is omitted.

When dq conversion of the phase back electromotive forces $e_a$ of the formula (2-7) is made, back electromotive forces $E_d$ and $E_q$ are represented as shown by the following formula when the ninth order or more are omitted for ease of explanation.

$$E_d = (E_5 + E_7) sin6\omega_e t \ldots\ldots (2-8)$$

$$E_q = E_1 - (E_5 + E_7) cos6\omega_e t \ldots\ldots (2-9)$$

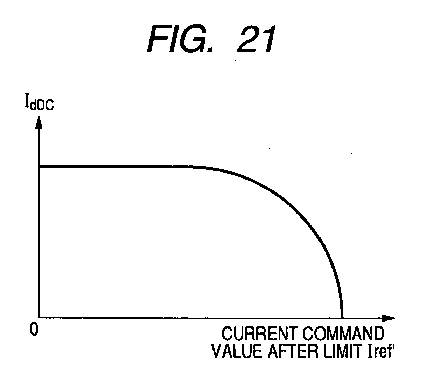

As described above, the current command value $I_{ref}$ is calculated by the steering assist current command value computation part and the DC component $I_{dDC}$ of a d axis current is calculated with reference to a DC component calculation map shown in Fig. 21 based on a current command value $I_{ref}'$ after the current limit.
Then, in the case of considering the AC d axis, a d axis current $i_d$ is represented as shown by the following formula when the twelfth-order or more are omitted for ease of explanation.

$$i_d = I_{dDC} + (i_{dc6} cos6\omega_e t - i_{ds6} sin6\omega_e t) \ldots\ldots (2-10)$$

where $i_{dc6}$ and $i_{ds6}$ are cosine and sine component of sixth-order d axis currents.
Then, when the formulas (2-8) to (2-10) are substituted into the formula (2-6) andTaylor's expansion of $1/E_q$ is performed and the twelfth-order or more are omitted, the following formula is obtained.

$$i_q = I_{qDC} + (i_{qc6} cos6\omega_e t - i_{qs6} sin6\omega_e t) \ldots\ldots (2-11)$$

where

$$I_{qDC} = (2/3)K_t I_{ref}/E_1 \ldots\ldots (2-12)$$

$$i_{qc6} = (E_5 - E_7) I_{qDC}/E_1 \ldots\ldots (2-13)$$

$$i_{qs6} = (E_5 + E_7) I_{dDC}/E_1 \ldots\ldots (2-14)$$

Since the sixth-order d axis depends on the sixth-order q axis, the following formulas are obtained.

$$i_{dc6} \propto i_{qc6} \quad \ldots\ldots\ldots \quad (2\text{-}15)$$

$$i_{ds6} \propto i_{qs6} \quad \ldots\ldots\ldots \quad (2\text{-}16)$$

Therefore, the d axis current command value DC component $I_{dDC}$ is calculated with reference to the DC component calculation map of Fig. 21 based on the current command value $I_{ref}'$ after the limit by the d axis current command value DC component computation part 1042 and the q axis current command value DC component $I_{qDC}$ is calculated by performing computation of the formula (2-12) by the q axis current command value DC component computation part 1043 and based on the formulas (2-13) to (2-16), sixth-order component amplitudes $i_{d6}$ and $i_{q6}$ are calculated and also 6nth-order component amplitudes $i_{d12}$ to $i_{d6n}$ and $i_{q12}$ to $i_{q6n}$ of the twelfth-order or more are calculated in the d axis current command value 6nth-order component amplitude computation part 1044 and the q axis current command value 6nth-order component amplitude computation part 1045.

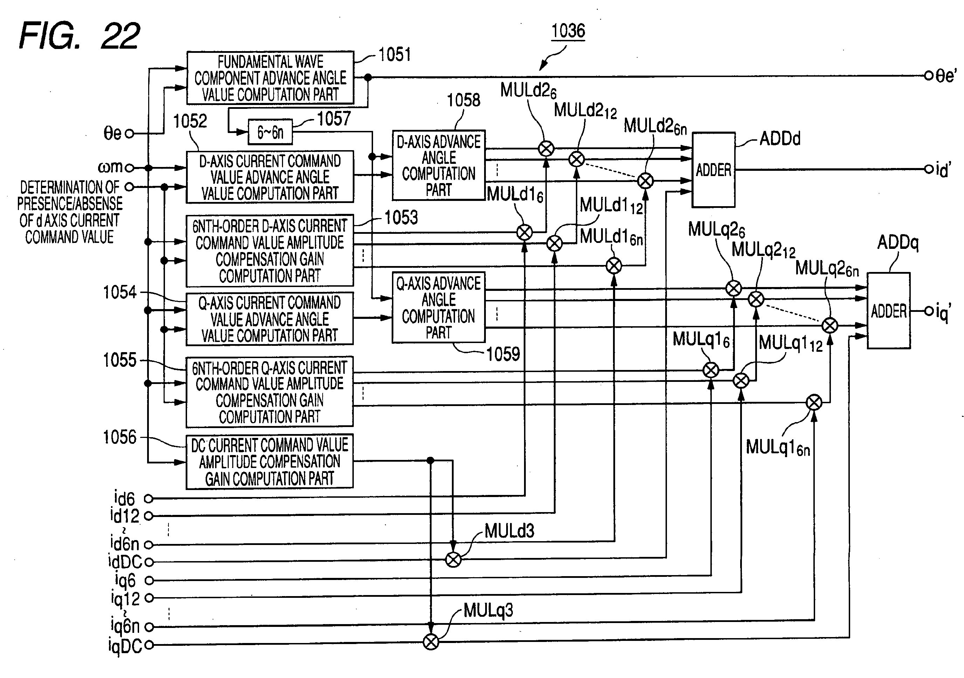

Also, the advance angle and amplitude compensation computation part 1036 comprises a fundamental wave component advance angle value computation part 1051 for performing advance angle computation of a fundamental wave component based on the electrical angle $\theta_e$ and the motor angular speed $\omega_m$ as shown in Fig. 22.
Further, the advance angle and amplitude compensation computation part 1036 comprises a d axis current command value advance angle value computation part 1052 for computing advance angle values $\phi_{d6}$ to $\phi_{d6n}$ of a d axis current command value based on the d axis current command value Id and the motor angular speed $\omega_m$, a 6nth-order d axis current command value amplitude compensation gain computation part 1053 for computing amplitude compensation gains $G_{d6}$ to $G_{d6n}$ of amplitudes $i_{d6}$ to $i_{d6n}$ of 6nth-order d axis current command values, a q axis current command value advance angle computation part 1054 for computing advance angle values $\phi_{q6}$ to $\phi_{q6n}$ of a q axis current command value Iq, and a 6nth-order q axis current command value amplitude compensation gain computation part 1055 for computing amplitude compensation gains $G_{q6}$ to $G_{q6n}$ of amplitudes $i_{q6}$ to $i_{q6n}$ of 6nth-order q axis current command values.

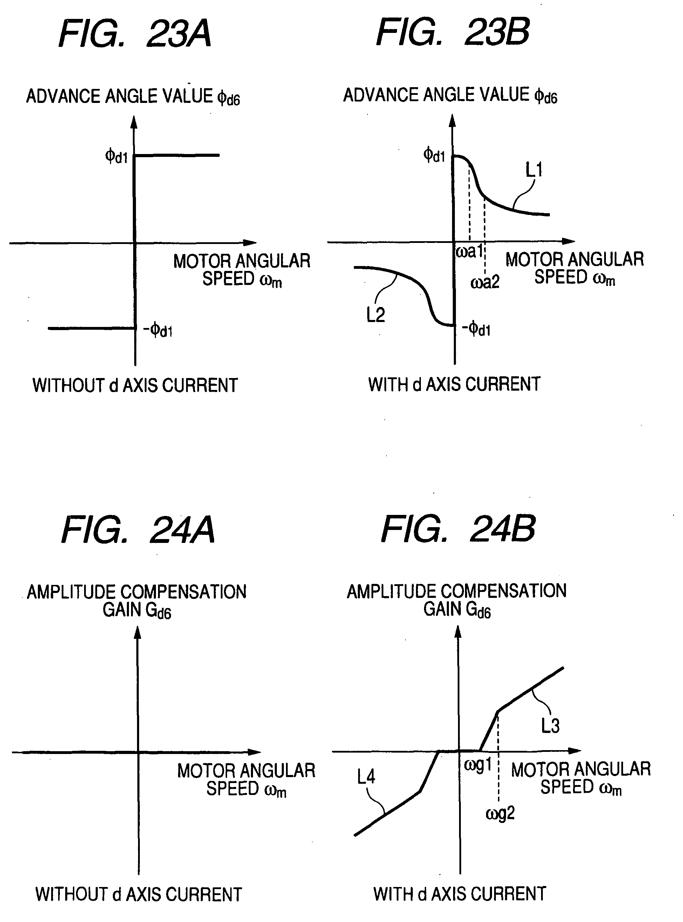

Furthermore, the advance angle and amplitude compensation computation part 1036 comprises a DC current command value amplitude compensation gain computation part 1056 for computing a DC current command value amplitude compensation gain Gdc based on the motor angular speed $\omega_m$.
Here, the d axis current command value advance angle value computation part 1052 decides whether it is in a fundamental wave advance angle control state of performing advance angle control of only a fundamental wave component in which this d axis current command value Id continues "0" based on the d axis current command value Id or is in a whole advance angle control state of including 6nth-order harmonic components in a fundamental wave component in which the d axis current command value Id changes. When this decision result is the fundamental wave advance angle control state in which the d axis current command value Id continues "0", in the case of taking an advance angle value of a sixth-order d axis current command value as an example, an advance angle value calculation map in which the amount becomes a positive predetermined advance angle value $\phi_{d1}$ regardless of a value of the motor angular speed $\omega_m$ when the motor angular speed $\omega_m$ is a positive value including "0" and the amount becomes a negative predetermined advance angle value $-\phi_{d1}$ regardless of a value of the motor angular speed $\omega_m$ when the motor angular speed $\omega_m$ is a negative value as shown in Fig. 23a is used and an advance angle value $\Phi_{d6}$ is calculated with reference to the advance angle value calculation map based on the motor angular speed $\omega_m$ and with respect to advance angle values $\phi_{d12}$, $\phi_{d18}\cdots \phi_{d6n}$ of 6nth-order d axis currents similarly, the advance angle values are calculated with reference to advance angle value calculation maps (not shown).

Also, when the decision result is the whole advance angle control state in which the d axis current command value Id changes, in the case of taking an advance angle value of a sixth-order d axis current command value as an example, a map for advance angle value calculation in which a characteristic curve L1 in which the amount becomes the positive predetermined advance angle value $\phi_{d1}$ when the motor angular speed $\omega_m$ is "0" and the amount decreases relatively gradually while the motor angular speed $\omega_m$ increases from this to a predetermined value $\omega a1$ and then the amount decreases relatively steeply while the motor angular speed $\omega_m$ increases to a predetermined value $\omega a2$ and the amount decreases relatively gradually when the motor angular speed $\omega_m$ is the predetermined value $\omega a2$ or more is set in the case where the motor angular speed $\omega_m$ increases from "0" to a positive value and a characteristic curve L2 with a point symmetry shape about the origin (advance angle value $\phi_{d6}=0$, motor angular speed $\omega_m=0$) with respect to the characteristic curve L1 is set in the case where the motor angular speed $\omega_m$ increases from "0" to a negative value as shown in Fig. 23B is used and an advance angle value $\phi_{d6}$ is calculated with reference to the map for advance angle value calculation based on the motor angular speed $\omega_m$ and with respect to advance angle values $\phi_{d12}$, $\phi_{d18}\cdots\phi_{d6n}$ of

6nth-order d axis current command values similarly, the advance angle values are calculatedwith reference to advance angle value calculation maps (not shown).

Also, the 6nth-order d axis current command value amplitude compensation gain computation part 1053 decides whether it is in a fundamental wave advance angle control state in which this d axis current command value Id continues "0" based on the d axis current command value Id or is in a whole advance angle control state in which the d axis current command value Id changes. When this decision result is the fundamental wave advance angle control state in which the d axis current command value Id continues "0", in the case of taking an amplitude compensation gain $Gd_6$ of a sixth-order d axis current command value as an example, a map for sixth-order current command value amplitude compensation gain calculation in which the amplitude compensation gain $Gd_6$ maintains "0" regardless of a value of the motor angular speed $\omega_m$ as shown in Fig. 24A is used and a sixth-order current command value amplitude compensation gain $Gd_6=0$ is calculated with reference to the map for sixth-order current command value amplitude compensation gain calculation based on the motor angular speed $\omega_m$ and 6nth-order current command value amplitude compensation gains $Gd_{12}$, $Gd_{18}$ .....$Gd_{6n}$ are calculatedwith reference to maps for 6nth-order current command value amplitude compensation gain calculation (not shown) similarly.

Also, when the decision result is the whole wave advance angle control state in which the d axis current command value Id changes, in the case of taking an amplitude compensation gain $Gd_6$ of a sixth-order d axis current command value as an example, an amplitude compensation gain $Gd_6$ is calculated with reference to a sixth-order current command value amplitude compensation gain calculation map in which a polygonal line-shaped characteristic curve L3 in which the amplitude compensation gain Gd becomes "0" while the motor angular speed $\omega_m$ is in the range from "0" to a positive predetermined value $\omega g1$ and the amplitude compensation gain increases relatively steeply in response to an increase in the motor angular speed $\omega_m$ while the motor angular speed $\omega_m$ exceeds the predetermined value $\omega g1$ and reaches a predetermined value $\omega g2$ and the amplitude compensation gain increases relatively gradually in response to an increase in the motor angular speed $\omega_m$ when the motor angular speed $\omega_m$ exceeds the predetermined value $\omega g2$ is set in the case where the motor angular speed $\omega_m$ increases from "0" to a positive value and a characteristic curve L4 with a point symmetry shape about the origin (advance angle value $\phi_{d6}=0$, motor angular speed $\omega_m=0$) with respect to the characteristic curve L3 is set in the case where the motor angular speed $\omega_m$ increases from "0" to a negative value as shown in Fig. 24B, and 6nth-order current command value amplitude compensation gains $Gd_{12}$, $Gd_{18}$ ......$Gd_{6n}$ are calculated with reference to maps for 6nth-order current command value amplitude compensation gain calculation (not shown) similarly.

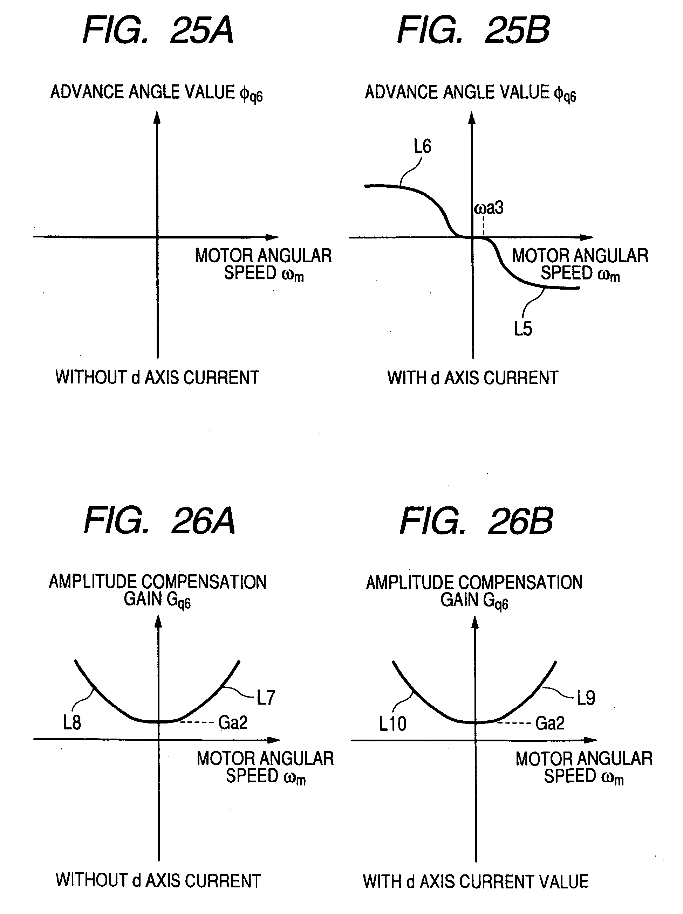

Further, the q axis current command value advance angle value computation part 1054 decides whether it is in a fundamental wave advance angle control state in which this d axis current command value Id continues "0" based on the d axis current command value Id or is in a whole advance angle control state in which the d axis current command value Id changes. When this decision result is the fundamental wave advance angle control state in which the d axis current command value Id continues "0", in the case of taking an advance angle value $\phi_{q6}$ of a sixth-order q axis current command value as an example, a map for q axis current command value advance angle value calculation in which the advance angle value $\Phi_{q6}$ maintains "0" regardless of a value of the motor angular speed $\omega_m$ as shown in Fig. 25A is used and a d axis current command value advance angle value $\Phi_{q6}$ is calculated with reference to the map for advance angle value calculation based on the motor angular speed $\omega_m$ and with respect to advance angle values $\Phi_{q12}$, $\Phi_{q18}$··· $\Phi_{q6n}$ of 6nth-order q axis currents similarly, the advance angle values are calculatedwith reference to advance angle value calculation maps (not shown).

Also, when the decision result is the whole advance angle control state in which the d axis current command value Id changes, in the case of taking an advance angle value $\phi_{q6}$ of a sixth-order q axis current command value as an example, a map for advance angle value calculation in which a parabolic characteristic curve L5 in which the advance angle value $\phi_{q6}$ becomes "0" while the motor angular speed $\omega_m$ is in the range from "0" to a positive predetermined value $\omega a3$ and the q axis advance angle value $\phi_{q6}$ increases in a negative direction in response to an increase in the motor angular speed $\omega_m$ when the motor angular speed $\omega_m$ exceeds the predetermined value $\omega a3$ is set in the case where the motor angular speed $\omega_m$ increases from "0" to a positive value and a characteristic curve L6 with a point symmetry shape about the origin (advance angle value $\phi_{q6}=0$, motor angular speed $\omega_m=0$) with respect to the characteristic curve L5 is set in the case where the motor angular speed $\omega_m$ increases from "0" to a negative value as shown in Fig. 25B is used and a q axis advance angle value $\phi_{q6}$ is calculated with reference to the map for advance angle value calculation based on the motor angular speed $\omega_m$ and with respect to advance angle values $\phi_{q12}$, $\phi_{q18}$.....$\phi_{q6n}$ of 6nth-order q axis currents similarly, the advance angle values are calculatedwith reference to advance angle value calculation maps (not shown).

Furthermore, the 6nth-order q axis current command value amplitude compensation gain computation part 1055 decides whether it is in a fundamental wave advance angle control state in which this d axis current command value Id continues "0" based on the d axis current command value Id or is in a whole advance angle control state in which the d axis current command value Id changes. When this decision result is the fundamental wave advance angle control state in which the d axis current command value Id continues "0", in the case of taking an amplitude compensation gain of a sixth-order q axis current command value as an example, a map for sixth-order q axis current command value amplitude compensation gain calculation in which a parabolic characteristic curve L7 in which the amplitude compensation gain $G_{q6}$ becomes a positive predetermined value Ga2 when a value of the motor angular speed $\omega_m$ is "0" and the amplitude compensation gain $G_{q6}$ increases nonlinearly in response to an increase in the motor angular speed $\omega_m$ when the value of the motor angular speed $\omega_m$ increases in a positive direction from this is set and a characteristic curve L8 with line symmetry using the amplitude compensation gain axis as a symmetrical line with respect to the characteristic curve L7 is set in the case where the motor angular speed $\omega_m$ increases in a negative direction from "0" as shown in Fig. 26A is used and a sixth-order q axis current command value amplitude compensation gain $G_{q6}$ is calculated based on the motor angular speed $\omega_m$ and 6nth-order current command value amplitude compensation gains $Gq_{12}$, $Gq_{18}$ ......$Gq_{6n}$ are calculated with reference to maps for 6nth-order current command value amplitude compensation gain calculation (not shown) similarly.

Also, when the decision result is the whole advance angle control state in which the d axis current command value Id changes, in the case of taking an amplitude compensation gain of a sixth-order q axis current command value as an example, a map for 6nth-order q axis current command value amplitude compensation gain calculation in which parabolic characteristic curves L9 and L10 similar to those of Fig. 26A are set as shown in Fig. 26B is used and a 6nth-order q axis current command value amplitude compensation gain $G_{q6}$ is calculated with reference to the map for amplitude compensation gain calculation based on the motor angular speed $\omega_m$ and 6nth-order current command value amplitude compensation gains $Gq_{12}$, $Gq_{18}$ .....$Gq_{6n}$ are calculated with reference to maps for 6nth-order current command value amplitude compensation gain calculation (not shown) similarly.

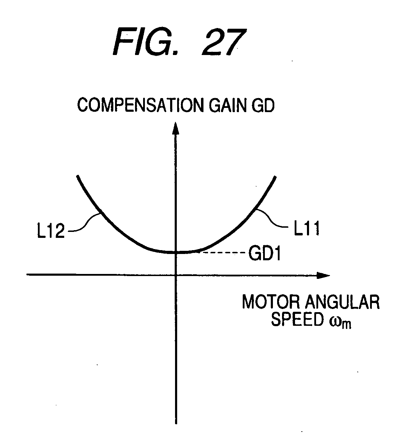

Moreover, the DC current command value amplitude compensation gain computation part 1056 has a map for amplitude compensation gain calculation in which parabolic characteristic curves L11 and L12 in which an amplitude compensation gain becomes an amplitude compensation gain GD of a predetermined value GD1 when the motor angular speed $\omega_m$ is "0" regardless of a fundamental wave advance angle control state and a whole advance angle control state and the amplitude compensation gain GD increases nonlinearly accordingly when the motor angular speed $\omega_m$ increases in a positive or negative direction from this are set as shown in Fig. 27, and a DC command value amplitude compensation gain GD is calculated with reference to the map for amplitude compensation gain calculation based on this motor angular speed $\omega_m$.

In these control maps shown in Figs. 23A to 27, each of the characteristic lines is set so as to compensate for the amount of attenuation in consideration of attenuation of each order harmonic component in a current control system, that is, the current control part 1040.

Then, an electrical angle $\theta_e'$ which is inputted from the electrical angle conversion part 1032 and is advanced by the fundamental wave component advance angle value computation part 1051 is multiplied by 6n by a multiplier 1057 and then is supplied to a d axis advance angle computation part 1058 and a q axis advance angle computation part 1059 and based on d axis advance angle values $\phi_{d6}$ to $\phi_{d6n}$ computed by the d axis current command value advance angle value computation part 1052 and an electrical angle $6n\theta_e'$ after the fundamental wave component advance angle multiplied by 6n, advance angle computation is performed and $\sin(6\theta_e'+\phi_{d6})$, $\sin(12\theta_e'+\phi_{d12})$,......, $\sin(6n\theta_e'+\phi_{d6n})$ are calculated by the d axis advance angle computation part 1058 and these are outputted individually.

Similarly, based on q axis advance angle values $\phi_{q6}$ to $\phi_{q6n}$ computed by the q axis current command value advance angle value computation part 1054 and an electrical angle $6n\theta_e'$ after the fundamental wave component advance angle multiplied by 6n, advance angle computation is performed and $\sin(6\theta_e'+\phi_{q6})$, $\sin(12\theta_e'+\phi_{q12})$,....., $\sin(6n\theta_e'+\phi_{q6n})$ are calculated by the q axis advance angle computation part 1059.

On the other hand, d axis current command value 6nth-order components $i_{d6}$ to $i_{d6n}$ outputted from the 6nth-order d axis current command value amplitude compensation gain computation part 1053 are supplied to multipliers MULd1$_6$ to MULd1$_{6n}$ and by these multipliers MULd1$_6$ to MULd1$_{6n}$, the d axis current command value 6nth-order components $i_{d6}$ to $i_{d6n}$ are multiplied by amplitude compensation gains $Gd_{d6}$ to $Gd_{d6n}$ of 6nth-order d axis current command values outputted from the 6nth-order d axis current command value amplitude compensation gain computation part 1053.

Then, by multipliers MULd2$_6$ to MULd2$_{6n}$, advance angle outputs $\sin(6\theta_e'+\phi_{d6})$ to $\sin(6n\theta_e'+\phi_{d6n})$ outputted from the advance angle computation part 1058 are multiplied by multiplication outputs $i_{d6} \cdot Gd_{d6}$ to $i_{d6n} \cdot Gd_{d6n}$ outputted from the multipliers MULd1$_6$ to MULd1$_{6n}$. On the other hand, a d axis current command value DC component $I_{dDC}$ outputted from the current command value limit part 1035 is supplied to a multiplier MULd3 and by this multiplier MULd3, the d axis current command value DC component $I_{dDC}$ is multiplied by an amplitude compensation gain $G_{DC}$ calculated in the DC current command value amplitude compensation gain computation part 1056 and this multiplication value $I_{dDC} \cdot G_{DC}$ is supplied to an adder ADDd and is added to multiplication outputs of the multipliers MULd2$_6$ to MULd2$_{6n}$ and a d axis current command value $i_d'$ with compensation represented by the following formula (2-17) is calculated.

$$i_d' = I_{dDC} \bullet G_{DC} + i_{d6} \bullet G_{d6} \sin(6\theta_e' + \phi_{d6}) + i_{d12} \bullet G_{d12} \sin(12\theta_e' + \phi_{d12})$$

$$+ \ldots\ldots + i_{d6n} \bullet G_{d6n} \sin(6n\theta_e' + \phi_{d6n}) \quad \ldots\ldots\ldots \quad (2\text{-}17)$$

Similarly, with respect to a q axis current command value $i_q'$ with compensation, multiplication and addition are made by multipliers MULq1$_6$ to MULq1$_{6n}$, MULq2$_6$ to MULq2$_{6n}$, MULq3 and an adder ADDq and a q axis current command value $i_q'$ with compensation shown by the following formula (2-18) is calculated.

$$i_q' = I_{qDC} \bullet G_{DC} + i_{q6} \bullet G_{q6} \sin(6\theta_e' + \phi_{q6}) + i_{q12} \bullet G_{q12} \sin(12\theta_e' + \phi_{q12})$$

$$+ \ldots\ldots + i_{q6n} \bullet G_{q6n} \sin(6n\theta_e' + \phi_{q6n}) \quad \ldots\ldots\ldots \quad (2\text{-}18)$$

Then, the electrical angle $\theta_e'$ with advance angle, the d axis current command value $i_d'$ with compensation and the q axis current command value $i_q'$ with compensation outputted from the each order harmonic component advance angle and amplitude compensation computation part 1036 are supplied to the two-phase/three-phase conversion part 1037 and are converted into current command values Iu*, Iv* and Iw* of a U phase, a V phase and a W phase of the brush-less motor 1012.
The current control part 1040 comprises subtracters 1071u, 1071v and 1071w for obtaining each of the phase current errors $\Delta$Iu, $\Delta$Iv, $\Delta$Iw by subtracting motor phase current detection values Iud, Ivd, Iwd flowing through each of the phase coils Lu, Lv, Lw detected by the current detection circuit 1022 from current command values Iu*, Iv*, Iw* supplied from the target current setting part 1030, and a PI control part 1072 for calculating phase voltage command values Vu, Vv, Vw by performing proportional-integral control over each of the phase current errors $\Delta$Iu, $\Delta$Iv, $\Delta$Iw obtained.
Then, the phase voltage command values Vu, Vv, Vwoutputted from the PI control part 1072 are supplied to the FET gate driving circuit 1025.
As shown in Fig. 17, the motor driving circuit 1024 has an inverter configuration in which switching elements Qua, Qub, Qva, Qvb and Qwa, Qwb constructed of N-channel MOSFETs connected in series with each of the phase coils Lu, Lv and Lw are connected in parallel, and a connection point of the switching elements Qua, Qub, a connection point of Qva, Qvb and a connection point of Qwa, Qwb are respectively connected to the side opposite to a neutral point Pn of each of the phase coils Lu, Lv and Lw.
Then, a PWM (pulse width modulation) signal outputted from the FET gate driving circuit 1025 is supplied to gates of each of the switching elements Qua, Qub, Qva, Qvb and Qwa, Qwb constructing the motor driving circuit 1024.
Next, an action of the embodiment will be described.
Now, when the steering wheel 1001 is steered, steering torque T at that time is detected by the steering torque sensor 1003 and also a vehicle speed detection value Vs is detected by the vehicle speed sensor 1021. Then, the detected steering torque T and vehicle speed detection value Vs are inputted to the steering assist current command value computation part 1031 in the target current setting part 1030 of the control computation device 1023 and thereby, a steering assist current command value $I_{ref}$ is calculated with reference to the steering assist current command value calculation map of Fig. 19 by this steering assist current command value computation part 1031.
Then, an upper limit value of the calculated steering assist current command value $I_{ref}$ is limited based on a motor angular speed $\omega_m$ by the current command value limit part 1035 and also, a d axis current command value $I_d$ constructed of amplitudes $i_{d6}$ to $i_{d6n}$ of d axis current command value 6nth-order components and a d axis current command value DC component $I_{dDC}$ represented by the formula (2-1) described above and a q axis current command value $I_q$ constructed of amplitudes $i_{q6}$ to $i_{q6n}$ of q axis current command value 6nth-order components and a q axis current command value DC component $I_{qDC}$ represented by the formula (2-2) described above are outputted to the each order harmonic component advance angle and amplitude compensation computation part 1036.
In this each order harmonic component advance angle and amplitude compensation computation part 1036, a fundamental wave component advance angle value $\theta_e'$ with compensation is calculated by the fundamental wave component advance angle value computation part 1051, and d axis advance angle values $\phi_{d6}$ to $\phi_{d6n}$, d axis amplitude compensation gains $G_{d6}$ to $G_{d6n}$, q axis advance angle values $\phi_{q6}$ to $\phi_{q6n}$ and q axis amplitude compensation gains $G_{q6}$ to $G_{q6n}$ are respectively calculated with reference to control maps based on the motor angular speed $\omega_m$ by the d axis current command value advance angle value computation part 1052, the 6nth-order d axis current command value amplitude compensation gain computation part 1053, the q axis current command value advance angle value computation part 1054, the 6nth-order q axis current command value amplitude compensation gain computation part 1055 and the DC current command value amplitude compensation gain computation part 1056, and a d axis current command value

$i_d$' with compensation and a q axis current command value $i_q$' with compensation represented by the formula (2-17) and the formula (2-18) described above are calculated based on these amounts and gains, and the fundamental wave component advance angle value $\theta_e$' with compensation, the d axis current command value $i_d$' with compensation and the q axis current command value $i_q$' with compensation calculated are supplied to the two-phase/three-phase conversion part 1037 and three-phase current command values Iu*, Iv* and Iw* are calculated.

Then, the calculated three-phase current command values Iu*, Iv* and Iw* are inputted to the current control part 1040. In this current control part 1040, PI control of deviation ΔIu, ΔIv and ΔIw of the three-phase current command values Iu*, Iv* and Iw* from each of the phase current detection values Iud, Ivd and Iwd detected by the motor current detection circuit 1022 is performed by the PI control part 1072 and voltage command values Vu, Vv and Vw are calculated and the voltage command values are supplied to the FET gate driving circuit 1025 and thereby, a pulse width modulation signal of a duty ratio according to the voltage command values Vu, Vv and Vw is supplied to the motor driving circuit 1024 and a motor driving current is supplied from the motor driving circuit 1024 to the brush-less motor 1012.

As a result of this, steering assist force according to the steering torque T is generated by the brush-less motor 1012 and this steering assist force is transmitted to the steering shaft 1002 through the reduction gear 1011 and thereby, the steering wheel 1001 can be steered with light steering force.

At this time, in the each order harmonic component advance angle and amplitude compensation computation part 1036, d axis advance angle values $\phi_{d6}$ to $\phi_{d6n}$, d axis amplitude compensation gains $G_{d6}$ to $G_{d6n}$, q axis advance angle values $\phi_{q6}$ to $\phi_{q6n}$ and q axis amplitude compensation gains $G_{q6}$ to $G_{q6n}$ are calculated with reference to control maps based on the motor angular speed $\omega_m$ and a d axis current command value $i_d$' with compensation and a q axis current command value $i_q$' with compensation represented by the formula (2-17) and the formula (2-18) described above are calculated based on these amounts and gains, and at the time of fundamental wave advance angle control in which the d axis current command value $I_d$ is "0", when the motor angular speed $\omega_m$ is a positive value including zero, the d axis advance angle values $\phi_{d6}$ to $\phi_{d6n}$ maintain a predetermined value $\phi_{d1}$ regardless of its value and when the motor angular speed $\omega_m$ is a negative value, the d axis advance angle values $\phi_{d6}$ to $\phi_{d6n}$ maintain a predetermined value $-\phi_{d1}$. However, the 6nth-order d axis current command value amplitude compensation gains $G_{d6}$ to $G_{d6n}$ become "0", so that d axis current command value 6nth-order components become "0" and a d axis current DC component also becomes "0", so that a d axis current command value $i_d$' outputted from the adder ADDd also maintains zero.

On the other hand, for a q axis current command value $i_q$', the q axis advance angle values $\phi_{q6}$ to $\phi_{q6n}$ are set at "0" but in q axis 6nth-order current command value amplitude compensation gains, as shown in the control map of Fig. 26, at least a q axis sixth-order current command value amplitude compensation gain $Gq_6$ becomes a positive predetermined value Ga2 when the motor angular speed $\omega_m$ is "0" and the q axis sixth-order current command value amplitude compensation gain increases relatively steeply in a positive direction as an absolute value of the motor angular speed $\omega_m$ increases from this and the other q axis 6nth-order current command value amplitude compensation gains also have a similar tendency and thereby, the q axis current command value $i_q$' with compensation in which 6nth-order components of the q axis current command value are increased and compensated can be obtained.

Also, at the time of whole advance angle control in which the d current command value $I_d$ is not "0", the d axis advance angle values $\phi_{d6}$ to $\phi_{d6n}$ decreases as the motor angular speed $\omega_m$ increases, but amplitude compensation gains $G_{d6}$ to $G_{d6n}$ of d axis 6nth-order components increase and thereby, the d axis current command value $i_d$' with compensation in which 6nth-order harmonic components of the d axis current command value are increased and compensated can be obtained.

Further, for DC components $I_{dDc}$ and $I_{qDC}$ of the d axis current command value and the q axis current command value, compensation gains GD similarly increase as the motor angular speed $\omega_m$ increases in a manner similar to the q axis current command value 6nth-order components and thereby, the DC components $I_{dDC}$ and $I_{qDC}$ are increased and compensated and the d axis current command value $i_d$' with compensation and the q axis current command value $i_q$' with compensation are increased.

As a result of this, while maintaining a torque constant state, the amount of attenuation of each order harmonic component by characteristics of a current control system is compensated and an ideal current as designed can be supplied to the brush-less motor 1012 and attenuation of high-order harmonics of the case of rotating and controlling the brush-less motor 1012 at high speed can be prevented surely and torque fluctuation and output reduction in the brush-less motor 1012 can be prevented surely.

Also, since it is constructed so as to make compensation for high-order harmonic components on d-q coordinates, there is no need to separate respective harmonic components of three-phase current command values using a filter etc., and the amount of computation can be decreased and a computation load of a computation processing device can be reduced and compensation for high-order harmonic components can be made without applying the expensive computation processing device. In addition, 6nth orders (n=1, 2, 3, ......) are obtained when coordinate conversions of 6n±1th-order (n=1, 2, 3, ......) harmonics are made in a d-q coordinate system, so that equivalent advance angle values and amplitude compensation gains of each order component including a fundamental wave can be preset easily by calculation or experiment.

Further, an advance angle value and an amplitude compensation gain are calculated with reference to a control map based on a motor angular speed using the control map in consideration of attenuation of a harmonic component in a current control system by the d axis current command value advance angle value computation part 1052, the 6nth-order d axis current command value amplitude compensation gain computation part 1053, the q axis current command value advance angle value computation part 1054, the 6nth-order q axis current command value amplitude compensation gain computation part 1055 and the DC current command value amplitude compensation gain computation part 1056, respectively, so that the advance angle value and the amplitude compensation gain can be calculated accurately and easily.

Further, the brush-less motor 1012 can be driven with output reduction and torque fluctuation prevented surely as described above, so that when steering assist force generated by this brush-less motor 1012 is transmitted to the steering shaft 1002 through the reduction gear 1011, torque fluctuation can be surely prevented from occurring in a steering wheel and a good feeling of steering can be given to a driver.

In addition, in the second embodiment, the case of calculating the advance angle values $\phi_{d6}$ to $\phi_{d6n}$ and $\phi_{q6}$ to $\phi_{q6n}$, the 6nth-order component compensation gains $G_{d6}$ to $G_{d6n}$ and $G_{q6}$ to $G_{q6n}$ and the DC component compensation gain GD by the each order harmonic component advance angle and amplitude compensation computation part 1036 has been described, but it is not limited to this case and it may be constructed so as to omit any one of the advance angle values and the 6nth-order component compensation gains.

Also, in the second embodiment, the case of converting the d axis current command value $i_d$' with compensation and the q axis current command value $i_q$' with compensation into the three-phase target currents Iu*, Iv* and Iw* by the two-phase/three-phase conversion part 1037 and then supplying the current command values to the current control part 1040 has been described, but it is not limited to this case and it maybe constructed so that the two-phase/three-phase conversion part 1037 is omitted and instead of this, motor currents Idu, Idv and Idw detected by the motor current detection circuit 1022 are supplied to a three-phase/two-phase conversion part and are converted into a d axis detection current and a q axis detection current and deviation of the converted d axis detection current and q axis detection current from the d axis current command value $i_d$' with compensation and the q axis current command value $i_q$' with compensation calculated by the target current setting part 1030 is calculated and then two-phase/three-phase conversion of the deviation is made and phase control voltage is calculated.

Further, in the second embodiment, the case where the electric motor is a three-phase motor has been described, but it is not limited to this case and the invention can also be applied to a multi-phase motor having the number of phases exceeding three.

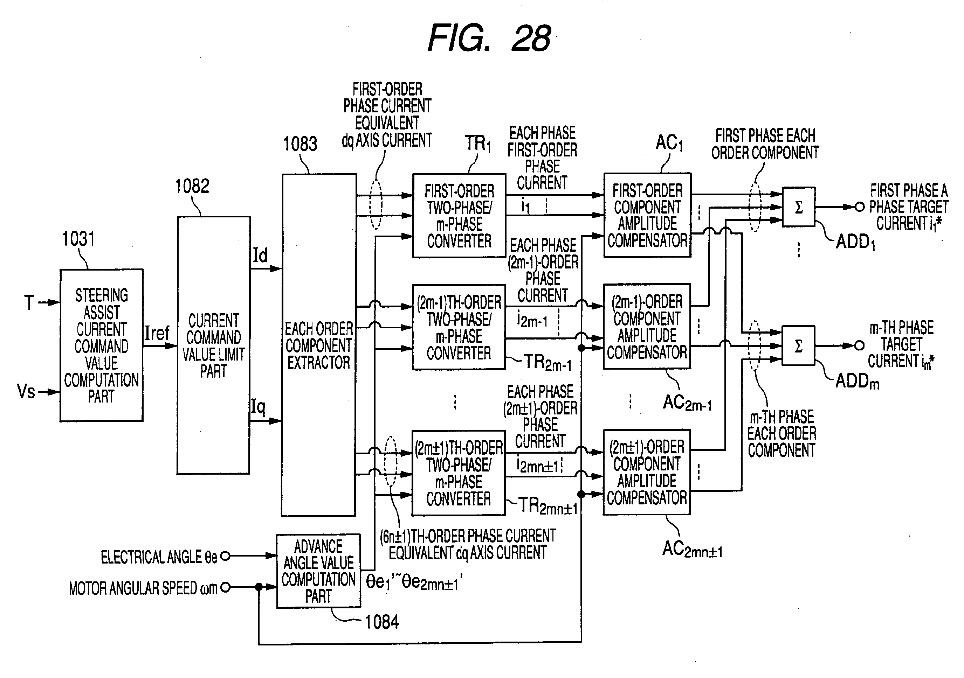

Next, a third embodiment of the invention will be described with reference to Fig. 28.

This third embodiment is constructed based on an m-phase so that $(2mn \pm 1)$ th-order harmonic components are extracted from a d axis command value and a q axis command value and amplitude compensation of the extracted $(2mn \pm 1)$th-order harmonic components is individually made and then the $(2mn \pm 1)$th-order harmonic components are added and thereby the first phase target current to the m-th phase target current of an m-phase brush-less motor are calculated.

That is, in the third embodiment, a target current setting part 1030 is constructed as shown in Fig. 28. In a manner similar to the second embodiment described above, in this target current setting part 1030, a steering assist current command value $I_{ref}$ outputted from a steering assist current command value computation part 1031 is inputted to a current command value limit part 1082 and by this current command value limit part 1082, a d axis current command value $I_d$ and a q axis current command value $I_q$ of a vector format similar to the above-mentioned formulas (2-1) and (2-2) represented by the following formulas (2-19) and (2-20) are calculated and the calculated d axis current command value $I_d$ and q axis current command value $I_q$ are inputted to an each order component extractor 1083 and by this each order component extractor 1083, first-order phase current equivalent dq axis current command values $I_{d1}$, $I_{q1}$ forming a fundamental wave component, $(2m-1)$th-order harmonic phase current equivalent dq axis current command values $I_{d(2m-1)}$, $I_{q(2m-1)}$, $(2m+1)$th-order harmonic phase current equivalent dq axis current command values $I_{d(2m+1)}$, $I_{q(2m+1)}$, ....., $(2mn \pm 1)$th-order harmonic phase current equivalent dq axis current command values $I_{d(2mn \pm 1)}$, $I_{q(2mn \pm 1)}$ are separated and extracted.

$$I_d = [I_{d1} \ I_{d(2m-1)} \ I_{d(2m+1)} \ ...... \ I_{d(2mn \pm 1)}] \quad ......... \quad (2-19)$$

$$I_q = [I_{q1} \ I_{q(2m-1)} \ I_{q(2m+1)} \ ...... \ I_{q(2mn \pm 1)}] \quad ......... \quad (2-20)$$

where $I_{d1}$ to $I_{d(2mn \pm 1)}$ are a first-order phase current equivalent d axis current to a $(2mn \pm 1)$th-order phase current equivalent d axis current and

$I_{q1}$ to $I_{q(2mn\pm1)}$ are a first-order phase current equivalent q axis current to a (2mn±1)th-order phase current equivalent q axis current.

Then, each of the dq axis current command values $I_{d1}$, $I_{q1}$; $I_{d(2m-1)}$, $I_{q(2m-1)}$; $I_{d(2m+1)}$, $I_{q(2m+1)}$;.....; $I_{d(2mn\pm1)}$, $I_{q(2mn\pm1)}$ separated and extracted is individually supplied to a first-order two-phase/m-phase converter $TR_1$, a (2m-1)th-order two-phase/m-phase converter $TR_{(2m-1)}$, ......, a (2mn±1)th-order two-phase/m-phase converter $TR_{(2mn\pm1)}$ for converting a dq two-phase signal into an m-phase signal of a brush-less motor 1012. Each of the order electrical angles ($\omega_e t+\phi_1$) to ($(2mn\pm1)\omega_e t+\phi_{2mn\pm1}$) after advance angle outputted from an advance angle value computation part 1084 for inputting an electrical angle $\theta_e$ and a motor angular speed $\omega_m$ and calculating advance angle values $\phi_1$ to $\phi_{2mn\pm1}$ of each order and calculating each of the order electrical angles ($\omega_e t+\phi_1$) to ($(2mn\pm1)\omega_e t+\phi_{2mn\pm1}$) with advance angle added to each of the order component electrical angles $\omega_e t$ to $(2mn\pm1)\omega_e t$ are inputted to these converters $TR_1$ to $TR_{2mn\pm1}$ and based on each of these order electrical angles ($\omega_e t+\phi_1$) to ($(2mn\pm1)\omega_e t+\phi_{2mn\pm1}$) after advance angle, two-phase/m-phase conversions are made and each phase first-order phase current $i_1$ to each phase (2mn±1)th-order phase current $i_{2mn\pm1}$ shown by the following formula (2-21) are calculated.

[Mathematical formula 2-21]

$$
\left.
\begin{aligned}
i_1^k &= I_1 \, sin\{(\omega_e t - \frac{2(k-1)}{m}\pi) + \phi_1\} \\[2mm]
i_{2m-1}^k &= I_{2m-1} \, sin\{(2m-1)(\omega_e t - \frac{2(k-1)}{m}\pi) + \phi_{2m-1}\} \\[2mm]
i_{2m+1}^k &= I_{2m+1} \, sin\{(2m+1)(\omega_e t - \frac{2(k-1)}{m}\pi) + \phi_{2m+1}\} \\[2mm]
&\vdots \\[2mm]
i_{2mn\mp1}^k &= I_{2mn\mp1} \, sin\{(2mn\mp1)(\omega_e t - \frac{2(k-1)}{m}\pi) + \phi_{2mn\mp1}\}
\end{aligned}
\right\} \cdots (2-21)
$$

where k indicates phase number from 1 to m.

Then, each phase first-order phase current $i^k_1$ to each phase (2mn±1)th-order phase current $i^k_{2mn\pm1}$ are individually supplied to a first-order component amplitude compensator $AC_1$ to a (2mn±1) th-order component amplitude compensator $AC_{2mn\pm1}$ and by these first-order component amplitude compensator $AC_1$ to (2mn±1)th-order component amplitude compensator $AC_{2mn\pm1}$, each phase first-order phase current $i^k_1$' to each phase (2mn±1)th-order phase current $i^k_{2mn\pm1}$' with compensation are calculated by dividing amplitude gains $g_1$ to $g_{2mn\pm1}$ for compensating for amplitude attenuation of harmonic components occurring in a current control system as shown by the following formula (2-22).

**[Mathematical formula 2-22]**

$$
\left.\begin{array}{l}
i_1^{k\,\prime} = \left(\dfrac{1}{g_1}\right)i_1^k \\[2ex]
i_{2m-1}^{k}{}^{\prime} = \left(\dfrac{1}{g_{2m-1}}\right)i_{2m-1}^k \\[2ex]
i_{2m+1}^{k}{}^{\prime} = \left(\dfrac{1}{g_{2m+1}}\right)i_{2m+1}^k \\[2ex]
\vdots \\[2ex]
i_{2mn\pm1}^{k}{}^{\prime} = \left(\dfrac{1}{g_{2mn\pm1}}\right)i_{2mn\pm1}^k
\end{array}\right\} \cdots (2-22)
$$

Then, each phase current is individually extracted from each phase first-order phase current $i^k_1{}'$ to each phase $(2mn\pm1)$th-order phase current $i^k_{2mn\pm1}$ with compensation calculated and is inputted to a first phase component adder $ADD_1$ to an m-th phase component adder $ADD_m$ and thereby a first phase target current $i^{l*}$ to an m-th phase target current $i^{m*}$ are calculated and these currents are outputted to a voltage control part 1040.

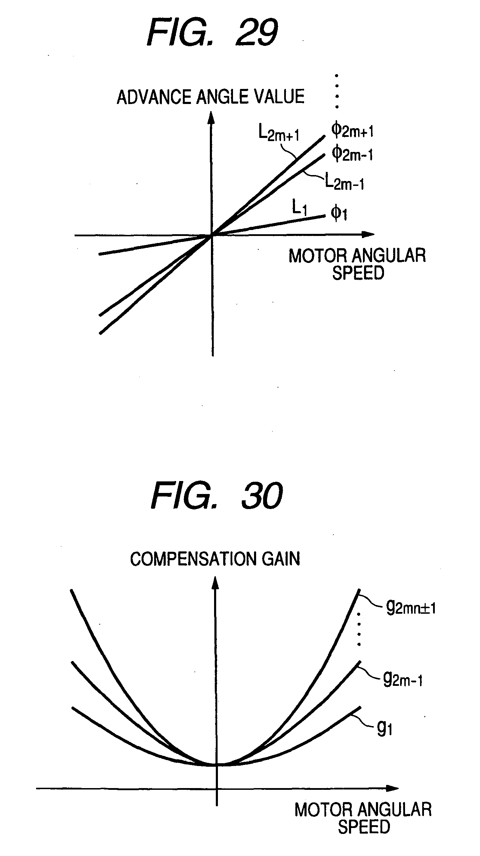

Here, in the advance angle value computation part 1084, as shown in Fig. 29, a motor angular speed $\omega_m$ is used as the axis of abscissa and an advance angle value is used as the axis of ordinate and a control map for setting characteristic straight lines using each order advance angle value $\phi_1$ to $\phi_{2mn\pm1}$ as a parameter is had. In this control map, in consideration of attenuation of harmonic components in the current control system, a first-order advance angle value $\phi_1$ is represented by a characteristic straight line $L_1$ with relatively gradual inclination and as the number of orders of an advance angle value increases than that of this first-order advance angle value $\phi_1$, characteristic straight lines $L_{2m-1}$, $L_{2m+1}$..... with larger inclination are set. Then, the first-order advance angle value $\phi_1$, the $(2m-1)$th-order advance angle value $\phi_{2m-1}$, the $(2m+1)$th-order advance angle value $\phi_{2m+1}$, ....., the $(2mn\pm1)$th-order advance angle value $\phi_{2mn\pm1}$ are calculated with reference to the control map of Fig. 29 based on the motor angular speed $\omega_e$ and the first-order advance angle value $\phi_1$ to the $(2mn\pm1)$th-order advance angle value $\phi_{2mn\pm1}$ calculated are added to each of the order electrical angles $\omega_e t$ to $(2mn\pm1)\omega_e t$ and thereby each of the order electrical angles $\theta_{e1}{}'$ to $\theta_{e(2mn\pm1)}{}'$ with compensation is calculated and each of the order electrical angles $\theta_{e1}{}'$ to $\theta_{e(2mn\pm1)}{}'$ with compensation calculated is supplied to the first-order two-phase/m-phase converter $TR_1$ to the $(2mn\pm1)$th-order two-phase/m-phase converter $TR_{2mn\pm1}$.

Also, in the first-order component amplitude compensator $AC_1$ to the $(2mn\pm1)$th-order component amplitude compensator $AC_{2mn\pm1}$, compensation gains $g_1$ to $g_{2mn\pm1}$ of first-order to $(2mn\pm1)$th-order components are calculated with reference to a control map representing a relation between a compensation gain and a motor angular speed $\omega_m$ shown in Fig. 30 based on the motor angular speed $\omega_m$. As shown in Fig. 30, the motor angular speed $\omega_m$ is used as the axis of abscissa and a value of the compensation gain is used as the axis of ordinate and this control map is set by parabolic characteristic curves using the number of orders as a parameter and is set so that curvatures of the characteristic curves become smaller as the number of orders becomes larger than the first order in consideration of attenuation of harmonic components in the current control system.

Next, an action of the third embodiment will be described.

It is constructed so that a steering assist current command value $I_{ref}$ according to steering torque T calculated by the steering assist current command value computation part 1031 is inputted and by the current command value limit part 1082, a d axis current command value $I_d$ and a q axis current command value $I_q$ represented by the formulas (2-19) and (2-20) are calculated and the d axis current command value $I_d$ and the q axis current command value $I_q$ calculated are inputted and by each component extractor 1083, first-order phase current equivalent dq currents $I_{d1}$, $I_{q1}$ to $(2mn\pm1)$th-order phase current equivalent dq axis currents $I_{d(2mn\pm1)}$, $I_{q(2mn\pm1)}$ are separated and extracted and phase conversions of these extracted dq axis currents are made by the first-order two-phase/m-phase converter $TR_1$ to the $(2mn\pm1)$th-order two-phase/m-phase converter $TR_{2mn\pm1}$ based on each of the order electrical angles $\theta_{e1}{}'$ to $\theta_{e2mn\pm1}{}'$ with advance angle calculated by the advance angle value computation part 1084 and each phase first-order phase current to each phase $(2mn\pm1)$th-order phase current are calculated and amplitude compensation for each phase first-order phase current to each phase $'2mn\pm1)$ th-order phase current calculated is individually made by the amplitude compensators $AC_1$ to $AC_{2mn\pm1}$.

As a result of this, generally, when a current command value with respect to, for example, an A phase (first phase) of the brush-less motor 1012 is set at $i^{1*}$, this A phase current command value $i^{1*}$ can be represented by the following formula (2-23).

$$i^{1*} = I_1 \sin\omega_e t + I_{2m-1}\sin\{(2m-1)\omega_e t\} + I_{2m+1}\sin\{(2m+1)\omega_e t\}$$

$$\ldots\ldots + I_{2mn\pm1}\sin\{(2mn\pm1)\omega_e t\} \quad \ldots\ldots\ldots (2-23)$$

where $I_1$, $I_{2m-1}$,.....$I_{2mn\pm1}$ are amplitudes of currents of each order component and
$\omega_e$ is a motor electrical angular speed and t is time and n is a natural number.

This formula (2-23) is a current waveform obtained from a torque constant formula, that is, an ideal current waveform, but an actual current actually supplied to the brush-less motor 1012 attenuates by characteristics of the current control system as represented by the following formula (2-24).

$$i^1 = g_1 I_1 \sin(\omega_e t-\phi_1) + g_{2m-1}I_{2m-1}\sin\{(2m-1)\omega_e t-\phi_{2m-1}\} +$$

$$g_{2m+1}I_{2m+1}\sin\{(2m+1)\omega_e t-\phi_{2m+1}\} + \ldots\ldots+$$

$$g_{2mn\pm1}I_{2mn\pm1}\sin\{(2mn\pm1)\omega_e t-\phi_{2mn\pm1}\} \quad \ldots\ldots\ldots (2-24)$$

where $g_1$ to $g_{2mn\pm1}$ are amplitude attenuation rates of each order component and
$\phi_1$ to $\phi_{2mn\pm1}$ are phase lags of each order component.
It is apparent from this formula (2-24) that an actual current $i_1$ actually flowing through the brush-less motor 1012 is not an ideal waveform.

However, in the present embodiment, an advance angle value for solving a phase lag by characteristics of the current control system is calculated by the advance angle value computation part 1084 and also by each of the order amplitude compensators $AC_1$ to $AC_{2mn\pm1}$, amplitude compensation is made by dividing the amplitude reduction rates $g_1$ to $g_{2mn\pm1}$, so that an A phase target current $i^{1*}$ outputted from the adder $ADD_1$ is represented as shown by the following formula (2-25) and compensation for amplitude reduction and phase lag in the current control system is made and an actual current supplied to the brush-less motor 1012 can be set at an ideal current as represented by the formula (2-23) described above.

$$i^{1*} = (1/g_1) I_1 \sin(\omega_e t+\phi_1) +$$

$$(1/g_{2m-1}) I_{2m-1}\sin\{(2m-1)\omega_e t+\phi_{2m-1}\} +$$

$$(1/g_{2m+1}) I_{2m+1}\sin\{(2m+1)\omega_e t+\phi_{2m+1}\} \quad \ldots\ldots +$$

$$(1/g_{2mn\pm1}) I_{2mn\pm1}\sin\{(2mn\pm1)\omega_e t+\phi_{2mn\pm1}\} \quad \ldots\ldots\ldots (2-25)$$

Therefore, while maintaining a torque constant state, the amount of attenuation of each order harmonic component by characteristics of the current control system is compensated and an ideal current as designed canbe supplied to the brush-less motor 1012 and the brush-less motor can be driven and controlled in an optimum state of occurrence of a torque ripple and reduction in output. In addition, an advance angle value and an amplitude compensation gain are calculated with reference to a control map based on a motor angular speed, so that the advance angle value and the amplitude compensation gain can be calculated accurately and easily.

As a result of this, by applying the brush-less motor 1012 to a steering system as a driving motor of an electric power steering apparatus for generating steering assist force, response at the time of high-speed steering can be improved and also a torque ripple can be suppressed to improve a feeling of steering.

In addition, in the third embodiment, the case of compensating for both of the advance angle value and amplitude has been described, but it is not limited to this case and it may be constructed so as to compensate for any one of the advance angle value and amplitude.

Also, in the second and third embodiments, the case of applying the invention to the electric power steering apparatus has been described, but it is not limited to this case and the invention can be applied to a vehicle-mounted electric motor control apparatus applied to an electric tilt apparatus, an electric telescopic apparatus, etc. or an electric motor control apparatus applied to equipment comprising other general electric motors.

While there has been described in connection with the preferred embodiments of the present invention, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1. A motor drive control apparatus for controlling a motor, comprising:

   a main control part that performs a flux weakening control by a vector control of d-q axes; and
   a rate-limit control part that controls a rate of change in a d axis current command value in the vector control.

2. The motor drive control apparatus as set forth in claim 1, further comprising switching part that switches between motor control with flux weakening control and motor control without flux weakening control.

3. The motor drive control apparatus as set forth in claim 1, further comprising a current control system that supplies current to the motor,
   wherein a rate of change of the rate-limit control part is suppressed within a range in which the current control system can control.

4. The motor drive control apparatus as set forth in claim 3, wherein an upper limit of the rate of change is a limit value in which a sudden change in a rotation speed due to a sudden change in the d axis command value does not occur.

5. The motor drive control apparatus as set forth in claim 3, wherein the rate of change is in a range in which a current controlled by a current control part can sufficiently respond to a change in a phase current command value of the motor.

6. An electric power steering apparatus comprising:

   a motor of an electric power steering; and
   a motor drive control apparatus as set forth in claim 1 that controls the motor.

7. An electric motor control apparatus for controlling an electric motor, comprising:

   a motor angular speed detection part that detects a motor angular speed of the electric motor; and
   a motor control part comprising a current control system that controls the electric motor based on a motor current and a current command value,

   wherein the motor control part calculate the current command value in which torque becomes constant by considering characteristics of the current control system based on a motor angular speed detected by the motor angular speed detection part.

8. An electric motor control apparatus comprising:

   a motor control part comprising a current control system that controls a multi-phase electric motor having an back electromotive force including a high-order harmonic, based on a motor current and a current command value,

   wherein the motor control part comprises a current command value compensation unit that calculates an amplitude compensation value and an advance angle value of a current command value of each of the harmonic components so that torque becomes constant, by considering characteristics of the current control system and compensating for a current command value of the multi-phase electric motor based on the amplitude compensation value and the compensated advance angle value.

9. An electric motor control apparatus comprising:

a motor control part comprising a current control system that controls a multi-phase electric motor having an back electromotive force including a high-order harmonic based on a motor current and a current command value; and
a motor angular speed detection part that detects a motor angular speed of the electric motor,

wherein the motor control part comprises current command value compensation unit that calculates an amplitude compensation value and an advance angle value of a current command value in each order harmonic component of d-q coordinates of the multi-phase motor so that torque becomes constant, by considering characteristics of the current control systembased on a motor angular speed detected by the motor angular speed detection part on d-q coordinates rotating at a frequency corresponding to the motor angular speed and compensating for a current command value of the multi-phase electric motor based on the amplitude compensation value and the compensated advance angle value.

10. The electric motor control apparatus as claimed in claim 8, wherein

the current command value compensation unit comprises a control map representing a relation among an amplitude compensation gain, an advance angle value and a motor angular speed for suppressing attenuation of a harmonic component in the current control system and
the current command value compensation unit calculates the advance angle value and the amplitude compensation gain with reference to the control map based on the motor angular speed.

11. An electric power steering apparatus comprising:

an electric motor that generates steering assist force on a steering mechanism,

wherein the assist force is controlled by an electric motor control apparatus as set forth in claim 7.

FIG. 1

*FIG. 2*

—— WITHOUT FLUX WEAKENING CONTROL (Iq/speed)

—·— WITH FLUX WEAKENING CONTROL (Iq/speed)

— — — FLUX WEAKENING CONTROL d/q AXIS CURRENT RELATION (Iq/Id)

MOTOR CURRENT COMMAND VALUE (Id) [A]

MOTOR CURRENT COMMAND LIMIT VALUE (Iq) [A]

MOTOR ROTATIONAL SPEED (speed)n [rpm]

# FIG. 3

Legend:
- ——— WITHOUT FLUX WEAKENING CONTROL (Iq/speed)
- —·—· WITH FLUX WEAKENING CONTROL (Iq/speed)
- — — — FLUX WEAKENING CONTROL d/q AXIS CURRENT RELATION (Iq/Id)

Y-axis (left): MOTOR ROTATIONAL SPEED (speed)n [rpm]

Y-axis (right): MOTOR CURRENT COMMAND VALUE (Id) [A], Id=0

X-axis: MOTOR CURRENT COMMAND LIMIT VALUE (Iq) [A]

X-axis marks: 0, Iq=Ireft, Iqa, Iqb

EP 1 777 806 A2

FIG. 4

FIG. 5

MOTOR ROTATIONAL SPEED (speed) [rpm]

DETECTED MOTOR
ROTATIONAL SPEED n

WITHOUT FLUX WEAKENING CONTROL (Iq/speed)

— · — WITH FLUX WEAKENING CONTROL (Iq/speed)

— — — FLUX WEAKENING CONTROL d/q AXIS
CURRENT RELATION (Iq/Id)

Id=F(Iq)

MOTOR CURRENT
COMMAND VALUE (Id) [A]

Iq=Iqb

0          Iqa          Iqb      Ireft

MOTOR CURRENT COMMAND LIMIT VALUE (Iq) [A]

EP 1 777 806 A2

31

## FIG. 6

MOTOR ROTATIONAL SPEED, INCREASE IN ROTATION SPEED IS SMALL IN RUN STATE (1) TO RUN STATE (2) →

MOTOR q AXIS CURRENT (Iq), NO CHANGE IN RUN STATE (1) TO RUN STATE (2) →

MOTOR ROTATIONAL SPEED [rpm]

MOTOR CURRENT COMMAND VALUE (Id) [A]

△ RUN STATE (1)

□ RUN STATE (2)

—— WITHOUT FLUX WEAKENING CONTROL (Iq/speed)

—·—·— WITH FLUX WEAKENING CONTROL (Iq/speed)

— — — FLUX WEAKENING CONTROL d/q AXIS CURRENT RELATION (Iq/Id)

MOTOR CURRENT COMMAND LIMIT VALUE (Iq) [A]

RUN STATE (2), INCREASE TO Id= SEVERAL TENS OF AMPERES AT A BURST →

RUN STATE (1) Id=0A

TIME

# FIG. 7

FIG. 8

EP 1 777 806 A2

## FIG. 9

MOTOR ROTATIONAL SPEED, INCREASE IN ROTATION SPEED IS SMALL IN RUN STATE (1) TO RUN STATE (2) →

MOTOR q AXIS CURRENT (Iq), NO CHANGE IN RUN STATE (1) TO RUN STATE (2) →

MOTOR ROTATIONAL SPEED (speed) [rpm]

MOTOR CURRENT COMMAND VALUE (Id) [A]

△ RUN STATE (1)

□ RUN STATE (2)

——— WITHOUT FLUX WEAKENING CONTROL (Iq/speed)

—·—· WITH FLUX WEAKENING CONTROL (Iq/speed)

— — FLUX WEAKENING CONTROL d/q AXIS CURRENT RELATION (Iq/Id)

MOTOR CURRENT COMMAND LIMIT VALUE (Iq) [A]

RUN STATE (2), INCREASE TO Id = SEVERAL TENS OF AMPERES GRADUALLY

~110

RUN STATE (1) Id=OA

TIME

EP 1 777 806 A2

# FIG. 10

Legend:
- △ RUN STATE (1)
- □ RUN STATE (2)
- ○ RUN STATE (3)
- —— WITHOUT FLUX WEAKENING CONTROL (Iq/speed)
- —·— WITH FLUX WEAKENING CONTROL (Iq/speed)
- — — FLUX WEAKENING CONTROL d/q AXIS CURRENT RELATION (Iq/Id)

MOTOR ROTATIONAL SPEED (speed) [rpm]

MOTOR CURRENT COMMAND VALUE (Id) [A]

MOTOR CURRENT COMMAND LIMIT VALUE (Iq) [A]

EP 1 777 806 A2

# FIG. 11

```
        ┌─────────────────────┐
        │   d AXIS CURRENT    │
        │  COMMAND VALUE      │
        │ RATE-LIMIT CONTROL  │
        │    PART START       │
        └─────────────────────┘
                   │
                   ▼
        ┌─────────────────────┐  S1
        │ READING OF d AXIS CURRENT │
        │  COMMAND VALUE INPUT │
        │ Id_in(k) OF THIS SAMPLE TIME │
        └─────────────────────┘
                   │
                   ▼
        ┌─────────────────────┐  S2
        │ READING OF d AXIS CURRENT │
        │ COMMAND VALUE OUTPUT │
        │ Id(k-1) OF THE PREVIOUS │
        │    SAMPLE TIME      │
        └─────────────────────┘
                   │
                   ▼
```

(2)                          S3                            (3)

$Id\_in(k)-Id(k-1){\geq}D{\Delta}t$ ◄─── $Id\_in(k)-Id(k-1)$ ───► $Id\_in(k)-Id(k-1){\leq}-D{\Delta}t$

(1)

$|Id\_in(k)-Id(k-1)|{<}D{\Delta}t$

S20                          S10                          S30

| $Id(k)=Id(k-1)+D{\Delta}t$ | $Id(k)=Id\_in(k)$ | $Id(k)=Id(k-1)-D{\Delta}t$ |

END

# FIG. 12

*FIG. 13*

*FIG. 14*

FIG. 15

EP 1 777 806 A2

# FIG. 16

## FIG. 17

EP 1 777 806 A2

# FIG. 18

EP 1 777 806 A2

## FIG. 19

## FIG. 20

# FIG. 21

FIG. 22

EP 1 777 806 A2

EP 1 777 806 A2

## FIG. 23A

ADVANCE ANGLE VALUE $\phi_{d6}$

WITHOUT d AXIS CURRENT

## FIG. 23B

ADVANCE ANGLE VALUE $\phi_{d6}$

WITH d AXIS CURRENT

## FIG. 24A

AMPLITUDE COMPENSATION GAIN $G_{d6}$

WITHOUT d AXIS CURRENT

## FIG. 24B

AMPLITUDE COMPENSATION GAIN $G_{d6}$

WITH d AXIS CURRENT

47

# FIG. 25A

ADVANCE ANGLE VALUE $\phi_{q6}$

MOTOR ANGULAR SPEED $\omega_m$

WITHOUT d AXIS CURRENT

# FIG. 25B

ADVANCE ANGLE VALUE $\phi_{q6}$

L6

$\omega a3$

MOTOR ANGULAR SPEED $\omega_m$

L5

WITH d AXIS CURRENT

# FIG. 26A

AMPLITUDE COMPENSATION GAIN $G_{q6}$

L7

L8

Ga2

MOTOR ANGULAR SPEED $\omega_m$

WITHOUT d AXIS CURRENT

# FIG. 26B

AMPLITUDE COMPENSATION GAIN $G_{q6}$

L9

L10

Ga2

MOTOR ANGULAR SPEED $\omega_m$

WITH d AXIS CURRENT VALUE

# FIG. 27

COMPENSATION GAIN GD

L12

L11

GD1

MOTOR ANGULAR
SPEED $\omega_m$

## FIG. 28

# FIG. 29

ADVANCE ANGLE VALUE

$L_{2m+1}$  $\phi_{2m+1}$
$\phi_{2m-1}$
$L_{2m-1}$
$L_1$  $\phi_1$

MOTOR ANGULAR
SPEED

# FIG. 30

COMPENSATION GAIN

$g_{2mn\pm1}$
$g_{2m-1}$
$g_1$

MOTOR ANGULAR
SPEED

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001018822 A
- JP 2004328814 A